(19)

**Europäisches Patentamt**
**European Patent Office**
**Office européen des brevets**

(11) **EP 3 950 403 A1**

(12) **EUROPEAN PATENT APPLICATION**
published in accordance with Art. 153(4) EPC

(43) Date of publication:
**09.02.2022 Bulletin 2022/06**

(21) Application number: **19922242.3**

(22) Date of filing: **13.12.2019**

(51) International Patent Classification (IPC):
**B60L 15/20** (2006.01)  **H02M 7/48** (2007.01)
**H02P 6/08** (2016.01)  **H02P 21/06** (2016.01)
**H02P 27/06** (2006.01)  **H02P 29/66** (2016.01)
**B60L 9/18** (2006.01)

(52) Cooperative Patent Classification (CPC):
**B60L 9/18; B60L 15/20; H02M 7/48; H02P 6/08; H02P 21/06; H02P 27/06; H02P 29/66;** Y02T 10/64; Y02T 10/72

(86) International application number:
**PCT/JP2019/049067**

(87) International publication number:
**WO 2020/202655** (08.10.2020 Gazette 2020/41)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 JP 2019068193**

(71) Applicant: **Hitachi, Ltd.**
**Tokyo 100-8280 (JP)**

(72) Inventors:
• **SAKAI, Toshifumi**
**Tokyo 100-8280 (JP)**

• **ITO, Makoto**
**Tokyo 100-8280 (JP)**
• **IWAJI, Yoshitaka**
**Tokyo 100-8280 (JP)**
• **KUNIHIRO, Naoki**
**Tokyo 100-8280 (JP)**
• **SHINOMIYA, Takeshi**
**Tokyo 100-8280 (JP)**

(74) Representative: **Mewburn Ellis LLP**
**Aurora Building**
**Counterslip**
**Bristol BS1 6BX (GB)**

(54) **DRIVE DEVICE FOR PERMANENT-MAGNET SYNCHRONOUS MACHINE, TORQUE COMPENSATION METHOD FOR PERMANENT-MAGNET SYNCHRONOUS MACHINE, AND ELECTRIC VEHICLE**

(57)    A drive device for a permanent-magnet synchronous machine has a power converter 102 that drives a permanent-magnet synchronous machine 103, and a controller 101 that controls the power converter 102. The controller 101 comprises: a torque correction unit 110 that corrects an inputted torque command value; and a current command calculation unit 111 that generates, on the basis of the torque command value corrected by the torque correction unit 110, a current command value for controlling driving of the permanent-magnet synchronous machine 103. The torque correction unit 110 corrects the torque command value on the basis of a value associated with the magnetic flux of the permanent-magnet synchronous machine 103, and the current command value generated by the current command calculation unit 111.

**(Cont. next page)**

# FIG. 1

**Description**

Technical Field

The present invention relates to a drive device for a permanent-magnet synchronous machine, a torque compensation method for a permanent-magnet synchronous machine, and an electric vehicle.

Background Art

In a drive device for a synchronous motor having a permanent magnet, it has been known that, for example, the amount of magnetic flux of the permanent magnet changes due to a change in the temperature of the permanent magnet, and output torque fluctuates even if it is controlled to the same current operating point in accordance with a torque command. Therefore, in the case where the torque of the permanent magnet synchronous motor is controlled to a desired output, it is necessary to measure or estimate the temperature of the permanent magnet and control the permanent magnet synchronous motor in accordance with the value.

In addition, in the control of the permanent magnet synchronous motor, a method of controlling a field-weakening current for suppressing the terminal voltage of the permanent magnet synchronous motor has been used from the past in accordance with the rotational speed of the permanent magnet synchronous motor and the magnitude of the power supply voltage supplied to a power converter. For example, in the case where the amount of magnetic flux of the permanent magnet changes due to a change in the temperature of the permanent magnet, the magnitude of the induced voltage of the permanent magnet synchronous motor in accordance with the rotational speed changes, so that it is necessary to control the field-weakening current according to the temperature of the permanent magnet in addition to the rotational speed and the magnitude of the power supply voltage.

Therefore, in the case where the amount of magnetic flux of the permanent magnet changes due to a change in the temperature of the permanent magnet or the like, the output torque of the permanent magnet synchronous motor changes or the operating efficiency deteriorates, so that it is necessary to appropriately control the permanent magnet synchronous motor in accordance with fluctuations in torque, rotational speed, power supply voltage, magnet temperature, and the like.

In general, regarding to a method of compensating the output torque accompanying a change in the temperature of the permanent magnet synchronous motor, a method of compensating a current command in accordance with fluctuations in torque, rotational speed, power supply voltage, and magnet temperature has been known, and is disclosed in, for example, Patent Literature 1 and Patent Literature 2.

Patent Literature 1 discloses a technique in which a voltage value that can be applied to a motor is computed on the basis of a battery voltage, a correction voltage value obtained by correcting the voltage value computed on the basis of a motor temperature is obtained, and a field-weakening current value is computed on the basis of the correction voltage value and required torque, so that the fluctuation of the characteristics of the motor caused by the temperature rise of the motor is compensated to prevent the deterioration of output torque characteristics.

Patent Literature 2 discloses a technique in which plural d-q-axes current command maps in accordance with battery voltages are used to change a motor current in accordance with a change in battery voltage and a change in motor temperature, so that efficiency is improved when the battery voltage changes and torque fluctuation is suppressed when the motor temperature changes.

Citation List

Patent Literature

[Patent Literature 1] Japanese Unexamined Patent Application Publication No. 2000-184766
[Patent Literature 2] Japanese Unexamined Patent Application Publication No. 2006-304441

Summary of Invention

Technical Problem

However, in the technique disclosed in Patent Literature 1, the fluctuation of the voltage characteristics of the motor is computed on the basis of the motor temperature by using the voltage equation of the permanent magnet synchronous motor, the voltage is corrected by subtracting the voltage fluctuation from a maximum motor application voltage computed from an inverter input voltage, and d-q-axes current commands are computed on the basis of the voltage correction value. Therefore, in the case where the torque command is changed on the basis of the motor temperature, since it is necessary to control the field-weakening current in accordance with the degree of saturation of the output voltage in a calculation step of correcting the fluctuation of the output voltage accompanying the change, there is a risk that the computation of the d-q-axes current command values optimum for the torque command becomes complicated, and the torque control response cannot be set high. In addition, since motor current dependency is not considered in the inductance value used in the arithmetic expression, the distribution of the d-q-axes current commands cannot be optimally controlled, and operation efficiency is deteriorated.

In addition, in the technique disclosed in Patent Literature 2, since plural multidimensional tables are used to compute the d-q-axes current commands in accordance with changes in torque command, motor rotational speed, battery voltage, and motor temperature, a complicated table reference calculation is performed, and the calculation load of the control device becomes large. In addition, there are problems such as an increase in test, analysis and adjustment time for computing these table data in advance, and an increase in memory capacity for storing the table data.

In view of the above problems, an object of the present invention is to provide a drive device for a permanent-magnet synchronous machine, a torque compensation method for a permanent-magnet synchronous machine, and an electric vehicle capable of computing an appropriate current command for a high-efficiency operation and performing high-accuracy and high-response torque control with a simple configuration while suppressing an output torque error of a permanent magnet synchronous motor for changes in torque command, rotational speed, power supply voltage, magnet temperature, and the like.

Solution to Problem

As an example, the present invention for solving the problems provides a drive device for a permanent-magnet synchronous machine comprising a power converter for driving the permanent-magnet synchronous machine and a controller for controlling the power converter, wherein the controller includes: a torque correction unit for correcting an input torque command value; and a current command calculation unit for generating a current command value for driving and controlling the permanent-magnet synchronous machine from the torque command value corrected by the torque correction unit, and wherein the torque correction unit corrects the torque command value on the basis of a value associated with the magnet magnetic flux of the permanent-magnet synchronous machine and the current command value generated by the current command calculation unit.

Advantageous Effects of Invention

According to the present invention, the torque command value is corrected on the basis of the value associated with the magnet magnetic flux of the permanent-magnet synchronous machine and the current command value by separating the function of the adjusting means of the output torque due to the change in the magnet temperature of the permanent magnet synchronous motor from the function of the adjusting means of the output voltage due to the change in the magnet temperature, so that the torque accuracy, the operation efficiency, and the torque control response can be improved when the magnet temperature fluctuates.

Brief Description of Drawings

Fig. 1 is a block diagram for showing a configuration example of a drive system for a permanent-magnet synchronous machine of a first embodiment.
Fig. 2 is a diagram for showing definitions of coordinate systems and symbols used in control of the permanent-magnet synchronous machine of the first embodiment.
Fig. 3 is a block diagram for showing a configuration example of a current command calculation unit 111 of the first embodiment.
Fig. 4 is a block diagram for showing a configuration example of a torque correction unit 110 of the first embodiment.
Fig. 5 is a block diagram for showing a configuration example of a torque correction coefficient calculation unit 301 of the first embodiment.
Fig. 6 is a graph for exemplifying a relationship between d- and q-axes currents of the permanent-magnet synchronous machine and output torques at a reference temperature TmagO.
Fig. 7 is a graph for exemplifying a relationship between the d- and q-axes currents of the permanent-magnet synchronous machine and the output torques at a magnet temperature condition higher than the reference temperature TmagO.

Fig. 8 is a graph for exemplifying a relationship between the d- and q-axes currents of the permanent-magnet synchronous machine and the output torques at a magnet temperature condition lower than the reference temperature TmagO.

Fig. 9 is a graph for exemplifying a relationship of the output torque ratio of the output torque at the reference temperature TmagO to the d- and q-axes currents of the permanent-magnet synchronous machine at a magnet temperature condition higher than the reference temperature TmagO.

Fig. 10 is a block diagram for showing a configuration example of a torque correction coefficient calculation unit 301b as a modified example of the first embodiment.

Fig. 11 is a block diagram for showing a configuration example of a reluctance torque ratio correction coefficient calculation unit 402b as a modified example of the first embodiment.

Fig. 12 is a block diagram for showing a configuration example of a torque correction unit 110c as a modified example of the first embodiment.

Fig. 13 is a block diagram for showing a configuration example of a drive system for a permanent-magnet synchronous machine of a second embodiment.

Fig. 14 is a block diagram for showing a configuration example of a current command calculation unit 111d of the second embodiment.

Fig. 15 is a block diagram for showing a configuration example of a drive system for a permanent-magnet synchronous machine of a third embodiment.

Fig. 16 is a block diagram for showing a configuration example of a current command calculation unit 111e of the third embodiment.

Fig. 17 is a block diagram for showing a configuration example of a current command calculation unit 111f of a fourth embodiment.

Fig. 18 is a block diagram for showing a configuration example of a drive system for a permanent-magnet synchronous machine of a fifth embodiment.

Fig. 19 is a block diagram for showing a configuration example of a torque correction unit 110g of the fifth embodiment.

Fig. 20 is a block diagram for showing a configuration example of a torque correction coefficient calculation unit 301g of the fifth embodiment.

Fig. 21 is a block diagram for showing a configuration example of a d-axis current characteristic compensation coefficient calculation unit 902g of the fifth embodiment.

Fig. 22 is a block diagram for showing a configuration example of a drive system for a permanent-magnet synchronous machine of a sixth embodiment.

Fig. 23 is a block diagram for showing a configuration example of a torque command loss compensation unit 117h of the sixth embodiment.

Fig. 24 is a block diagram for showing a configuration example of an iron loss calculation unit 1201h of the sixth embodiment.

Fig. 25 is a block diagram for showing a configuration example of a mechanical loss calculation unit 1202h of the sixth embodiment.

Fig. 26 is a block diagram for showing a configuration example of a load loss calculation unit 1203h of the sixth embodiment.

Fig. 27 is a block diagram for showing a configuration example of an output adjustment unit 1205h of the sixth embodiment.

Fig. 28 is a block diagram for showing a configuration example of a drive system for a permanent-magnet synchronous machine as a modified example of the sixth embodiment.

Fig. 29 is a block diagram for showing a configuration example of a torque command loss compensation unit 117i as a modified example of the sixth embodiment.

Fig. 30 is a block diagram for showing a configuration example of an iron loss calculation unit 1201i as a modified example of the sixth embodiment.

Fig. 31 is a block diagram for showing a configuration example of an iron loss calculation unit 1201j as a modified example of the sixth embodiment.

Fig. 32 is a block diagram for showing a configuration example of a drive system for a permanent-magnet synchronous machine as a modified example of the sixth embodiment.

Fig. 33 is a block diagram for showing a configuration example of a torque command loss compensation unit 117k as a modified example of the sixth embodiment.

Fig. 34 is a block diagram for showing a configuration example of an iron loss calculation unit 1201k as a modified example of the sixth embodiment.

Fig. 35 is a block diagram for showing a configuration example of a drive system for a permanent-magnet synchronous machine of a seventh embodiment.

Fig. 36 is a block diagram for showing a configuration example of a torque correction unit 110m of the seventh embodiment.

Fig. 37 is a block diagram for showing a configuration example of a torque correction coefficient calculation unit 1301m of the seventh embodiment.

Fig. 38 is a block diagram for showing a configuration example of a torque correction coefficient calculation unit 1301n as a modified example of the seventh embodiment.

Fig. 39 is a block diagram for showing a configuration example of a torque correction coefficient calculation unit 1301o as a modified example of the seventh embodiment.

Fig. 40 is a diagram for showing an outline configuration of a part of a railway vehicle in which the drive system for the permanent-magnet synchronous machine according to any one of the first to seventh embodiments is mounted as an eighth embodiment.

Description of Embodiments

Hereinafter, first to eighth embodiments of the present invention will be described in detail with reference to the drawings. It should be noted that the same elements are followed by the same signs in principle in all the drawings. In addition, descriptions of parts having the same functions are omitted. Some or all of the following embodiments and modified examples may be combined within a consistent range.

[First Embodiment]

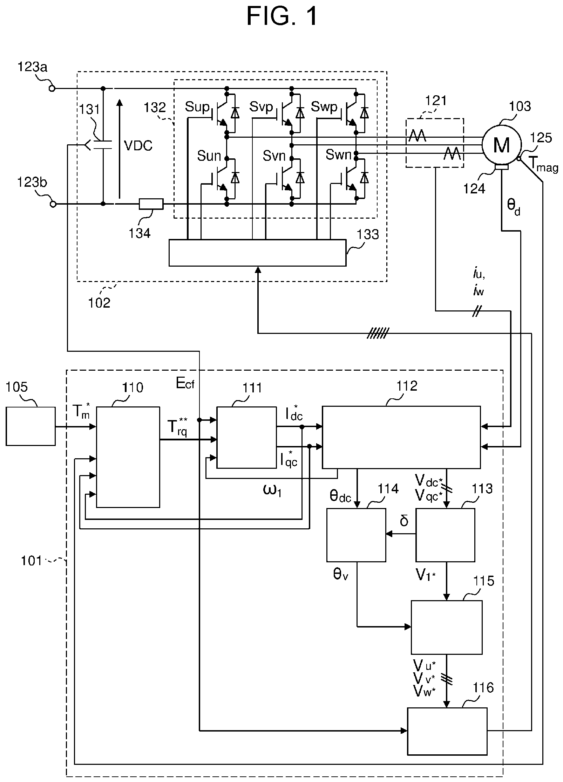

Fig. 1 is a block diagram for showing a configuration example of a drive system for a permanent-magnet synchronous machine of a first embodiment. The permanent-magnet synchronous machine drive system of the first embodiment includes a permanent-magnet synchronous machine 103 to be controlled, a power converter 102 for driving the permanent-magnet synchronous machine 103, a controller 101 for controlling the power converter 102, a command generator 105 for generating a torque command Tm* of the permanent-magnet synchronous machine 103, a phase current detection unit 121 for detecting a current flowing in the permanent-magnet synchronous machine 103, a rotational position detection unit 124 for detecting a magnetic pole position of a rotor of the permanent-magnet synchronous machine 103, and a temperature detection unit 125 for detecting a magnet temperature Tmag of the permanent-magnet synchronous machine 103. The magnet temperature Tmag of the permanent-magnet synchronous machine 103 is an example of a value associated with the amount of magnetic flux of the permanent magnet of the permanent-magnet synchronous machine 103.

The power converter 102 includes input terminals 123a and 123b for supplying power to the power converter 102, a main circuit unit 132 configured using six switching elements Sup to Swn, a gate driver 133 for directly driving the main circuit unit 132, a DC resistor 134 attached for overcurrent protection of the power converter 102, and a smoothing capacitor 131. On the basis of a gate command signal generated by the controller 101, the power converter 102 converts DC power supplied from the input terminals 123a and 123b into three-phase AC power, and supplies the three-phase AC power to the permanent-magnet synchronous machine 103.

The phase current detection unit 121 detects three-phase AC currents iu and iw flowing from the power converter 102 to the permanent-magnet synchronous machine 103. The phase current detection unit 121 is realized by, for example, a current sensor using a Hall element. It should be noted that although the phase current detection unit 121 of Fig. 1 is configured to detect an AC current by two-phase detection, three-phase detection may be used. In addition, without using a phase current sensor, an AC current value estimated from a current value flowing in the DC resistor 134 attached for overcurrent protection of the power converter 102 may be used.

The rotational position detection unit 124 detects a rotor position (rotational angle) of the permanent-magnet synchronous machine 103. The rotational position detection unit 124 is realized by, for example, a resolver, an encoder, a magnetic sensor, or the like. In addition, a vector control unit 112 computes a rotational speed $\omega r$ of the permanent-magnet synchronous machine 103 from the detected rotational position. It should be noted that, without using a rotational position sensor or a speed sensor, a speed sensorless configuration or a position sensorless configuration may be employed by estimating the rotational speed $\omega r$ or the magnetic pole position $\theta d$ of the permanent-magnet synchronous machine 103 on the basis of a voltage command value, a current detection value, or the like.

The temperature detection unit 125 detects the magnet temperature of the permanent-magnet synchronous machine 103. The temperature detection unit 125 is realized by, for example, a temperature sensor. It should be noted that, without using the magnet temperature itself, the temperature detecting unit 125 may detect the frame temperature of the permanent-magnet synchronous machine 103 or the coil temperature of the stator, and use a value obtained by estimating the magnet temperature Tmag of the permanent-magnet synchronous machine 103 from the frame temperature detection value or the coil temperature detection value. In addition, the magnitude of the induced voltage in accordance with the rotational speed of the permanent-magnet synchronous machine 103 may be detected or estimated to estimate the magnet temperature Tmag from the magnitude.

The command generator 105 is a controller that generates the torque command Tm* to an AC motor and is positioned higher than the controller 101. The controller 101 controls the generated torque of the permanent-magnet synchronous machine 103 on the basis of the torque command Tm* of the command generator 105. As the high-order controller, for example, a current controller is used to control a current flowing in the permanent-magnet synchronous machine 103, or a speed controller or a position controller is used to control a rotational speed or position. In the embodiment, the controller is operated as a torque controller because the purpose is to control the torque.

The controller 101 includes a torque correction unit 110, a current command calculation unit 111, a vector control unit 112, a polar coordinate conversion unit 113, a phase calculation unit 114, a three-phase coordinate conversion unit 115, and a PWM signal controller 116. The controller 101 generates a gate command signal for driving the switching elements of the power converter 102 from a calculation result of a current control system and a phase control system based on AC current detection values Iu and Iw that are detection values of the three-phase AC currents iu and iw flowing in the permanent-magnet synchronous machine 103 and the torque command Tm* from the command generator 105, and supplies the same to the gate driver 133 of the power converter 102.

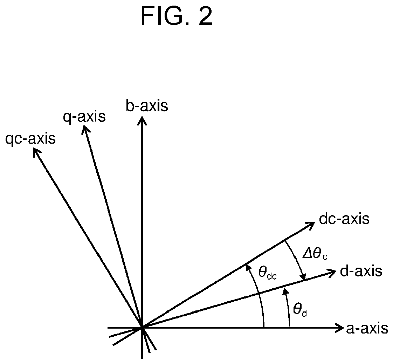

Fig. 2 is a diagram for showing definitions of coordinate systems and symbols used in control of the permanent-magnet synchronous machine 103 according to the present invention. In Fig. 2, the ab-axes coordinate system defined by the a-axis and the b-axis is a stator coordinate system representing the phase of the stator winding of the permanent-magnet synchronous machine 103, and the u-phase winding phase of the permanent-magnet synchronous machine 103 is generally used for the a-axis as a reference. The dq-axes coordinate system defined by the d-axis and the q-axis is a rotator coordinate system representing the magnetic pole position of the rotor of the permanent-magnet synchronous machine 103, and rotates in synchronization with the rotor magnetic pole position of the permanent-magnet synchronous machine 103. In the case of the permanent-magnet synchronous machine, the N-pole direction of the magnetic poles of the permanent magnet attached to the rotor is generally used for the d-axis as a reference, and the d-axis is also referred to as a magnetic pole axis. The dc-qc axes coordinate system defined by the dc-axis and the qc-axis is the estimated phase of the rotor magnetic pole position of the permanent-magnet synchronous machine 103, that is, the coordinate system in which the controller 101 is assumed in the d-axis and q-axis directions, and is also referred to as a control axis. It should be noted that the coordinate axes combined in each coordinate system are orthogonal to each other.

In each of the above coordinate systems, as shown in Fig. 2, the phases of the d-axis and dc-axis with respect to the a-axis are represented as $\theta d$ and $\theta dc$, respectively. In addition, the deviation of the dc-axis with respect to the d-axis is represented as $\Delta\theta c$. It should be noted that in the case where vector control is performed using the magnetic pole position $\theta d$ of the permanent-magnet synchronous machine 103 detected by the rotational position detection unit 124, the dq-axes coordinate system and the dc-qc-axes coordinate system match each other, and the deviation $\Delta\theta c$ of the dc-axis with respect to the d-axis becomes 0. However, in the case where there is an angular error such as a sensor attachment error at the rotor magnetic pole position of the permanent-magnet synchronous machine 103 detected by the rotational position detection unit 124, the deviation $\Delta\theta c$ of the dc-axis with respect to the d-axis occurs.

First, a configuration of the controller 101 shown in Fig. 1 will be described in detail.

The torque correction unit 110 outputs a torque command correction value Trq** calculated on the basis of the torque command Tm* output from the command generator 105, the magnet temperature Tmag output from the temperature detection unit 125, and current command values Idc* and Iqc* on the dc-qc-axes coordinate system output from the current command calculation unit 111.

The current command calculation unit 111 outputs the current command values Idc* and Iqc* on the dc-qc-axes coordinate system calculated on the basis of the drive frequency $\omega 1$ of the permanent-magnet synchronous machine 103 output from the vector control unit 112, the voltage detection value Ecf of the smoothing capacitor 131, and the torque command correction value Trq** output from the torque correction unit 110.

The vector control unit 112 separates the three-phase AC currents iu and iw that are the AC current detection values of the permanent-magnet synchronous machine 103 into torque current components (q-axis current components) and field-weakening current components (d-axis current components), and performs current control so as to match the current command values Idc* and Iqc* on the dc-qc-axes coordinate system output by the current command calculation unit 111. As a result of the current control, voltage command values Vdc* and Vqc* on the dc-qc-axes that are a rotational coordinate system are calculated and output. In addition, the vector control unit 112 also calculates and outputs the drive frequency $\omega 1$ and the control phase $\omega dc$ of the permanent-magnet synchronous machine 103. It should be noted that the rotational speed $\omega r$ and the magnetic pole position $\theta d$ detected by the rotational position detection unit 124 may be used as the drive frequency $\omega 1$ and the control phase $\theta dc$, or the rotational speed $\omega r$ and the magnetic pole position $\theta d$ of the permanent-magnet synchronous machine 103 may be estimated and used on the basis of a voltage command value, a current detection value, or the like.

The polar coordinate conversion unit 113 converts the voltage command values Vdc* and Vqc* output by the vector control unit 112 into a voltage amplitude command value V1* and a voltage command phase $\delta$ and outputs the same. The phase calculation unit 114 adds the voltage command phase $\delta$ to the control phase $\theta dc$ and outputs the

same as a voltage phase θv. The three-phase coordinate conversion unit 115 converts the voltage amplitude command value V1 output by the polar coordinate conversion unit 113 into three-phase AC voltage commands Vu*, Vv*, and Vw* on the basis of the voltage phase θv output by the phase calculation unit 114, and outputs the same to the PWM signal controller 116.

The PWM signal controller 116 generates a triangular wave carrier on the basis of an arbitrary carrier frequency fc and the voltage detection value Ecf of the smoothing capacitor 131, compares the magnitude of the triangular wave carrier with the magnitudes of modulation waves based on the three-phase AC voltage commands Vu*, Vv*, and Vw*, and performs pulse width modulation. Switching elements of the power converter 102 are turned on/off by a gate command signal generated by the calculation result of the pulse width modulation.

Hereinafter, the torque correction unit 110 and the current command calculation unit 111 that are characteristic parts of the first embodiment of the present invention will be described in detail.

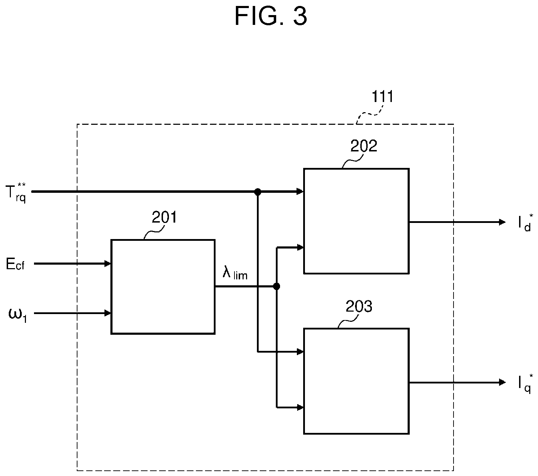

Fig. 3 is a block diagram for showing a configuration example of the current command calculation unit 111 of the first embodiment. As shown in Fig. 3, the current command calculation unit 111 includes a magnetic flux amount limit value calculation unit 201, a d-axis current command calculation unit 202, and a q-axis current command calculation unit 203. The current command calculation unit 111 computes and outputs the torque command correction value Trq**, the magnet temperature Tmag, the voltage detection value Ecf, and d- and q-axes current command values optimum for the fluctuation of the drive frequency ω1.

On the basis of the voltage detection value Ecf of the smoothing capacitor 131 and the drive frequency ω1 of the permanent-magnet synchronous machine 103 output from the vector control unit 112, the magnetic flux amount limit value calculation unit 201 calculates a magnetic flux amount limit value λlim serving as the limit value of the output voltage of the power converter 102, and outputs the same to the d-axis current command calculation unit 202 and the q-axis current command calculation unit 203. The magnetic flux amount limit value λlim may be a function proportional to the voltage detection value Ecf and inversely proportional to the drive frequency ω1. The magnetic flux amount limit value λlim is calculated by, for example, the following Equation (1).

[Equation 1]

$$\lambda_{lim} = \frac{E_{cf}}{\omega_1} \cdot \frac{2}{\pi} \quad \cdot \cdot \cdot \quad (1)$$

The d-axis current command calculation unit 202 calculates and outputs the d-axis current command value Idc* on the basis of the torque command correction value Trq** output from the torque correction unit 110 and the magnetic flux amount limit value λlim output from the magnetic flux amount limit value calculation unit 201. The q-axis current command calculation unit 203 calculates and outputs the q-axis current command value Iqc* on the basis of the torque command correction value Trq** output from the torque correction unit 110 and the magnetic flux amount limit value λlim output from the magnetic flux amount limit value calculation unit 201.

When calculating the d- and q-axes current commands, the current command calculation unit 111 of the first embodiment calculates the ratio of the drive frequency ω1 of the permanent-magnet synchronous machine 103 to the voltage detection value Ecf of the smoothing capacitor 131 to be unified and used as the magnetic flux amount limit value Alim, so that the d- and q- axes current command calculation can be configured by reference tables into which the torque command correction value Trq** and the magnetic flux amount limit value Alim are input. It should be noted that the reference table of the d-axis current command and the reference table of the q-axis current command may be obtained and used from, for example, a test or analysis in advance. In addition, the reference tables set d- and q-axes current command values in a magnet temperature condition as an arbitrary reference.

Further, the current command calculation unit 111 suppresses the fluctuation of the output torque due to changes in the torque command and the magnet temperature by adjusting the torque command correction value Trq**, and suppresses the fluctuation of the output voltage due to changes in the rotational speed and the power supply voltage by adjusting the magnetic flux amount limit value λlim. As described above, the current command calculation unit 111 can separately control the fluctuation correction of the output torque with respect to the changes in the torque command, the rotational speed, the power supply voltage, and the magnet temperature and the fluctuation correction of the output voltage.

Therefore, the first embodiment can realize high-accuracy and high-response torque control by adjusting the torque command correction value Trq** by the torque correction unit 110 on the basis of the magnet temperature Tmag and the current command value to compensate the output torque of the permanent-magnet synchronous machine 103 due to the change in the magnet temperature.

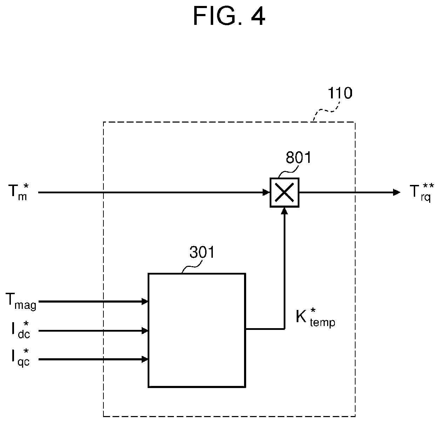

Fig. 4 is a block diagram for showing a configuration example of the torque correction unit 110 of the first embodiment. As shown in Fig. 4, the torque correction unit 110 includes a torque correction coefficient calculation unit 301 and a multiplier 801. The torque correction unit 110 outputs a calculation result obtained by multiplying the torque command Tm* by a torque correction coefficient Ktemp* output from the torque correction coefficient calculation unit 301 as the torque command correction value Trq**.

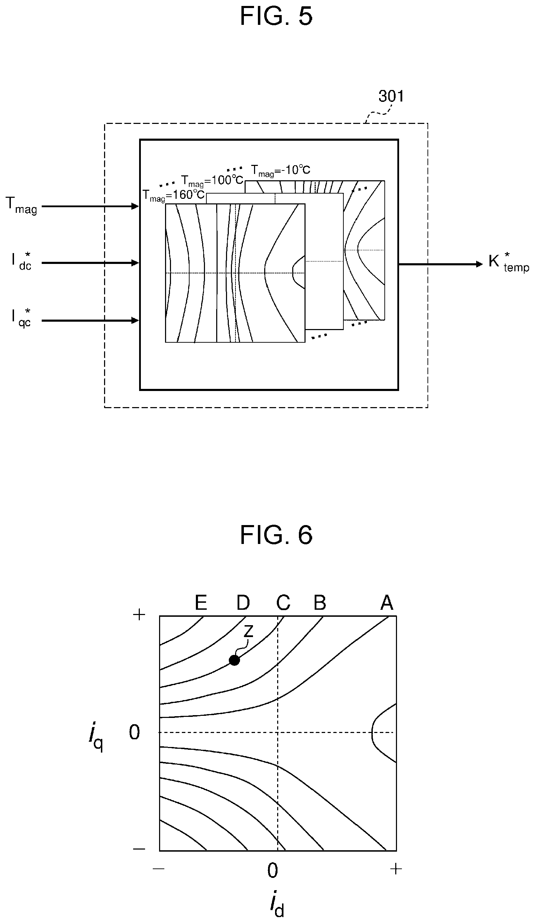

Fig. 5 is a block diagram for showing a configuration example of the torque correction coefficient calculation unit 301 of the first embodiment. As shown in Fig. 5, the torque correction coefficient calculation unit 301 calculates and outputs the torque correction coefficient Ktemp* on the basis of the magnet temperature Tmag of the permanent-magnet synchronous machine 103 detected by the temperature detection unit 125 and the d-axis current command value Idc* and the q-axis current command value Iqc* output from the current command calculation unit 111. It should be noted that, for example, reference tables into which the magnet temperature Tmag, the d-axis current command value Idc, and the q-axis current command value Iqc* are input may be used for the calculation of the torque correction coefficient Ktemp*. In addition, the reference table of the torque correction coefficient Ktemp* may be obtained and used from, for example, a test or analysis in advance.

Next, torque compensation means for the magnetic temperature change of the permanent-magnet synchronous machine that is a characteristic of the first embodiment will be described in detail.

First, in the case where the magnet temperature is constant, the current command calculation unit 111 of the first embodiment is configured to be able to compute the d-and q- axes current commands optimum for the changes in the torque command, the rotational speed, and the power supply voltage. In addition, as another characteristic, the torque control and the fluctuation of the output voltage due to the changes in the rotational speed and the power supply voltage can be individually controlled. Therefore, the compensation of the output torque fluctuation due to the change in the magnet temperature of the permanent-magnet synchronous machine can be performed only by adjusting the torque command values that are the inputs to the d-axis current command calculation unit 202 and the q-axis current command calculation unit 203.

Next, the torque correction coefficient Ktemp* of the torque correction unit 110 will be described by showing a concrete example.

Fig. 6 is a graph for exemplifying a relationship between the d- and q-axes currents of the permanent-magnet synchronous machine and the output torques at a reference temperature TmagO. The horizontal axis represents the d-axis current id flowing in the permanent-magnet synchronous machine, the vertical axis represents the q-axis current iq flowing in the permanent-magnet synchronous machine, and the magnitudes of the torques output by the permanent-magnet synchronous machine are represented by contour lines. It should be noted that the contour lines representing the magnitudes of the output torques assume that the output torque becomes larger in the order of A<B<C<D<E. In the arbitrary magnet temperature condition of Fig. 6, for example, in the case where the current of the permanent-magnet synchronous machine is controlled at the operating point of the d-axis current and the q-axis current indicated by the Z point, the magnitude of the output torque is C. In addition, the magnet temperature condition at this time is assumed to be the reference temperature TmagO.

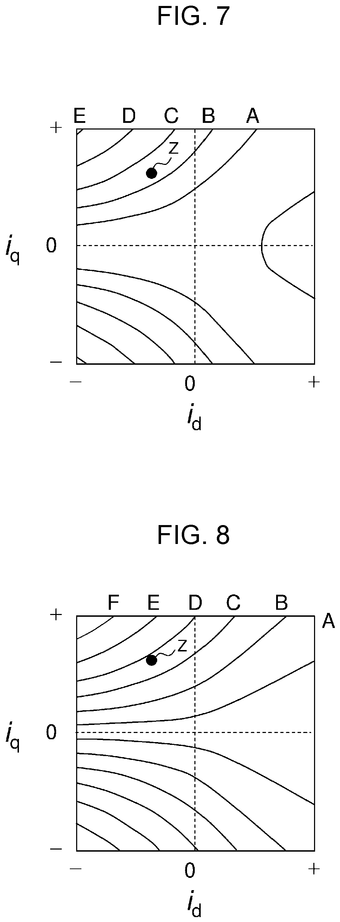

Fig. 7 is a graph for exemplifying a relationship between the d- and q-axes currents of the permanent-magnet synchronous machine and the output torques at a magnet temperature condition higher than the reference temperature TmagO. According to the torque map shown in Fig. 7, in the case where the current of the permanent-magnet synchronous machine is controlled at the Z point of the d-axis current and the q-axis current same as Fig. 6, it can be understood that the magnitudes of the output torques become smaller than that of C.

Fig. 8 is a graph for exemplifying a relationship between the d- and q-axes currents of the permanent-magnet synchronous machine and the output torques at a magnet temperature condition lower than the reference temperature Tmag0. In the case where the current of the permanent-magnet synchronous machine is controlled at the Z point of the d-axis current and the q-axis current same as Fig. 6 and Fig. 7, it can be understood that the magnitudes of the output torques become larger than that of C.

As described above, in the drive device for the synchronous motor having the permanent magnet, the amount of magnetic flux of the permanent magnet changes due to the temperature change of the permanent magnet, and the output torque fluctuates even if the drive device is controlled at the same current operating point in accordance with the torque command.

Accordingly, in the first embodiment, the torque correction unit 110 computes the torque correction coefficient Ktemp* on the basis of the magnet temperature Tmag, the d-axis current command value Idc*, and the q-axis current command value Iqc*, and corrects the torque command Tm* by using the torque correction coefficient Ktemp*, so that the fluctuation of the output torque due to the change in the magnet temperature of the permanent-magnet synchronous machine is compensated.

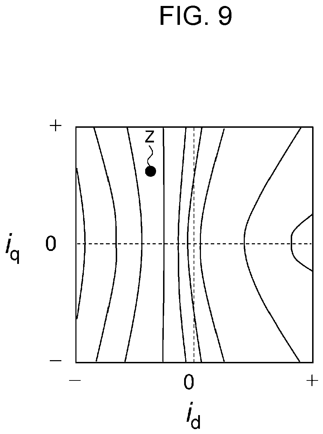

Fig. 9 is a graph for exemplifying a relationship of the output torque ratio of the output torque at the reference temperature TmagO to the d- and q-axes currents of the permanent-magnet synchronous machine at a magnet temperature condition higher than the reference temperature TmagO. Fig. 9 shows the ratio of the output torque at the reference temperature TmagO in Fig. 6 to the output torque at the magnet temperature higher than the reference temperature TmagO in Fig. 7 as a table map of the d-axis current id and the q-axis current iq.

In the first embodiment, for example, in the case where the d- and q-axes current command values computed at the reference temperature TmagO of the magnet temperature condition are set in the reference tables of the d-axis current command calculation unit 202 and the q-axis current command calculation unit 203 of the current command calculation unit 111, the torque correction coefficient Ktemp* of the torque correction unit 110 is based on the output torque at the reference temperature TmagO same as the computation condition of the d-axis current command calculation unit 202 and the q-axis current command calculation unit 203 of the current command calculation unit 111, and the ratio of the output torque in accordance with the change in the magnet temperature is provided as a reference table, so that the output torque fluctuation due to the change in the magnet temperature can be compensated.

Therefore, as in the embodiment, the output torque fluctuation due to the change in the magnet temperature can be compensated by adjusting the torque command values as the inputs of the d- and q-axes current command calculation in accordance with the magnet temperature.

It should be noted that the first embodiment shows a configuration example in which three-dimensional table data for outputting the torque correction coefficient Ktemp* by inputting the magnet temperature Tmag, the d-axis current command value Idc*, and the q-axis current command value Iqc* is used in the torque correction coefficient calculation unit 301 of the torque correction unit 110. The use of multidimensional table data enables torque compensation control with higher accuracy because complex state changes with respect to changes in a plurality of inputs can be considered. However, the table data of three dimensions or more causes problems such as an increase in test, analysis, and adjustment time for computing the d-and q-axes current command values and an increase in the memory capacity of the control device and the calculation load of the table reference.

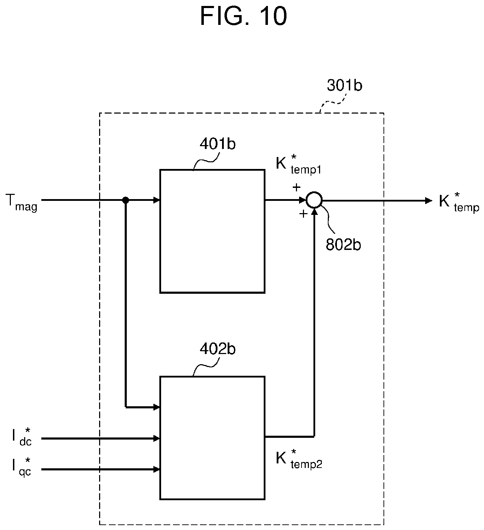

Fig. 10 is a block diagram for showing a configuration example of a torque correction coefficient calculation unit 301b as a modified example of the first embodiment. The first embodiment can also be realized by using the torque correction coefficient calculation unit 301b that does not use a three-dimensional reference table, instead of the torque correction coefficient calculation unit 301 that uses a three-dimensional reference table for computing the torque correction coefficient Ktemp* in accordance with the magnet temperature, the d-axis current command, and the q-axis current command.

In Fig. 10, the torque correction coefficient calculation unit 301b includes a magnet temperature dependent torque correction coefficient calculation unit 401b, a reluctance torque ratio correction coefficient calculation unit 402b, and an adder 802b. The torque correction coefficient calculation unit 301b outputs a value obtained by adding a torque correction coefficient Ktemp1* output from the magnet temperature dependent torque correction coefficient calculation unit 401a to a torque correction coefficient Ktemp2* output from the reluctance torque ratio correction coefficient calculation unit 402b as the torque correction coefficient Ktemp*.

First, the magnet temperature dependent torque correction coefficient calculation unit 401b computes, on the basis of the magnet temperature Tmag, a coefficient corresponding to the amount of change in magnet torque due to a change in magnet temperature using the reference temperature TmagO as a reference, and outputs the same as the torque correction coefficient Ktemp1*. Since the magnet torque is proportional to the magnitude of the magnet magnetic flux of the permanent-magnet synchronous machine, the amount of change in magnet magnetic flux in accordance with the magnet temperature Tmag may be computed, and the torque correction coefficient Ktemp1* corresponding to the amount of change in magnet torque may be calculated using the reference temperature TmagO as a reference.

Next, the reluctance torque ratio correction coefficient calculation unit 402b will be described in detail.

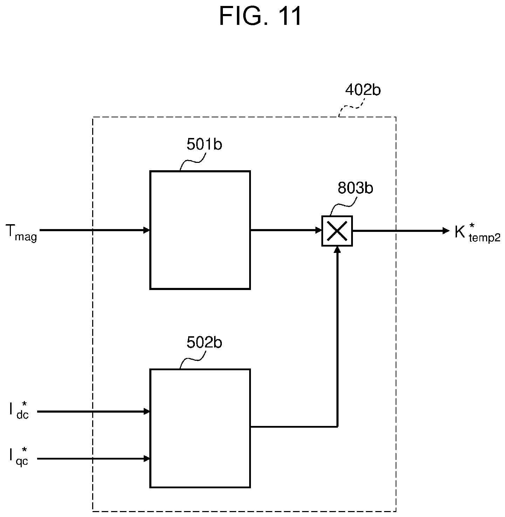

Fig. 11 is a block diagram for showing a configuration example of the reluctance torque ratio correction coefficient calculation unit 402b as a modified example of the first embodiment. As shown in Fig. 11, the reluctance torque ratio correction coefficient calculation unit 402b includes a reluctance torque ratio magnet temperature correction unit 501b, a reluctance torque estimation calculation unit 502b, and a multiplier 803b. On the basis of the d-axis current command value Idc*, the q-axis current command value Iqc*, and the magnet temperature Tmag, the reluctance torque ratio correction coefficient calculation unit 402b computes a coefficient corresponding to the amount of change in the ratio of magnet torque to reluctance at arbitrary current operating points of Idc* and Iqc* due to a change in magnet temperature using the reference temperature TmagO as a reference, and outputs the same as the torque correction coefficient Ktemp2*.

The reluctance torque ratio magnet temperature correction unit 501b outputs a coefficient for correcting the ratio of reluctance torque to magnet torque to the multiplier 803b on the basis of the reference temperature TmagO.

The reluctance torque estimation calculation unit 502b estimates and calculates the reluctance torque on the basis of the d-axis current command value Idc* and the q-axis current command value Iqc*, and outputs the same to the multiplier 803b.

Therefore, the reluctance torque ratio correction coefficient calculation unit 402b can compute the torque correction coefficient Ktemp2* in accordance with the changes in the magnet temperature Tmag, the d-axis current command value Idc*, and the q-axis current command value Iqc* without using the three-dimensional table. Since the torque is corrected in accordance with the optimum d- and q-axes current command values that vary due to the change in the magnet temperature of the permanent-magnet synchronous machine and the changes in the torque command, the rotational speed, and the power supply voltage, high-efficiency and high-accuracy torque control can be realized in the case where the magnet temperature changes.

It should be noted that in the case of a non-salient-pole permanent-magnet synchronous machine having no difference between the d-axis inductance Ld and the q-axis inductance, the reluctance torque is 0, and thus the reluctance torque ratio correction coefficient calculation unit 402b is not required. In addition, in the reluctance torque ratio correction coefficient calculation unit 402b, a d-axis current detection value Idc and a q-axis current detection value Iqc can be used instead of the d-axis current command value Idc* and the q-axis current command value Iqc*.

Further, in the case where the d- and q-axes current commands are restricted such as maximizing the torque current ratio or maximizing the efficiency in the current control, the torque command can be used instead of the d-axis current command value Idc* and the q-axis current command value Iqc* that are the inputs to the reluctance torque ratio correction coefficient calculation unit 402b.

In addition, the torque correction coefficient calculation unit 301 of the first embodiment can be implemented if the fluctuation ratio of the output torque due to the change in the magnet temperature of the permanent-magnet synchronous machine at the same id and iq current operating point is output as the torque correction coefficient Ktemp* by using the reference temperature TmagO of the d-axis current command calculation unit 202 and the q-axis current command calculation unit 203 of the current command calculation unit 111 as a reference.

In general, the magnitude of the output torque Tm of the permanent-magnet synchronous machine is represented by Equation (2). In Equation (2), the magnitude of the magnet magnetic flux of the permanent-magnet synchronous machine is Φm, the d-axis inductance is Ld, the q-axis inductance is Lq, the number of pole pairs is Pm, the d-axis current flowing in the permanent-magnet synchronous machine is id, and the q-axis current is iq. It should be noted that the first term on the right side of Equation (2) is magnet torque and the second term on the right side is reluctance torque.

[Equation 2]

$$T_m = P_m\{\Phi_m i_q + (L_d - L_q)i_d i_q\} \quad \cdot \cdot \cdot \quad (2)$$

Accordingly, the torque correction coefficient calculation unit 301 calculates the torque correction coefficient Ktemp* by estimating, as the magnet magnetic flux of the permanent-magnet synchronous machine at the reference temperature TmagO is Φm0 and the magnet magnetic flux of the permanent-magnet synchronous machine at the magnet temperature Tmag is Φm', the fluctuation of the output torque due to a change in magnet temperature in the case where current control is performed using the d-axis current command value Idc* and the q-axis current command value Iqc*. The torque correction coefficient Ktemp* is calculated by, for example, the following Equation (3).

[Equation 3]

$$K_{temp}^* = \frac{P_m\{\Phi_{m0}I_{qc}^* + (L_d - L_q)I_{dc}^* I_{qc}^*\}}{P_m\{\Phi_m' I_{qc}^* + (L_d - L_q)I_{dc}^* I_{qc}^*\}} \quad \cdot \cdot \cdot \quad (3)$$

It should be noted that in Equation (3), the magnet magnetic flux Φm' of the permanent-magnet synchronous machine at the magnet temperature Tmag may be a function based on Tmag, and is calculated by, for example, the following Equation (4). In addition, the temperature coefficient needs to be changed depending on the type and characteristics of the permanent magnet used for the permanent magnet synchronization.

[Equation 4]

$$\Phi_m' = \Phi_{m0} + k \cdot (T_{mag0} - T_{mag}) \quad \cdot \cdot \cdot \quad (4)$$

Further, in Equation (3), since the d-axis inductance Ld and the q-axis inductance Lq have characteristics of being changed non-linearly with respect to the d-axis current and the q-axis current, the output torque accuracy by the torque correction of the embodiment can be improved by computing the inductance value on the basis of the d-axis current command value Idc* and the q-axis current command value Iqc* or the d-axis current detection value Idc and the q-axis current detection value Iqc.

It should be noted that although the torque correction coefficient calculation unit 301 or 301b calculates the torque correction coefficient Ktemp* and computes the torque command correction value Trq** by multiplying the torque correction coefficient Ktemp* by the torque command Tm* from the command generator 105 in the torque correction unit 110 in the embodiment, a torque compensation amount ΔTrq-mag* based on the magnet temperature Tmag, the d-axis current command value Idc*, and the q-axis current command value Iqc* is computed, and the torque compensation amount ΔTrq-mag* may be added to the torque command Tm* to compute and use the torque command correction value Trq**.

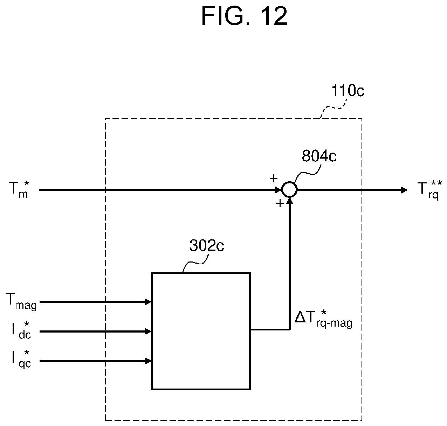

Fig. 12 is a block diagram for showing a configuration example of the torque correction unit 110c as a modified example of the first embodiment. The first embodiment can also be realized by using the torque correction unit 110c instead of the torque correction unit 110 by computing the amount of correction for the output torque due to the change in the magnet temperature of the permanent-magnet synchronous machine and adding the same to the torque command Tm* from the command generator 105 in the calculation of the torque command correction value Trq** in accordance with the changes in the torque command, the magnet temperature, the d-axis current command, and the q-axis current command.

The torque correction unit 110c includes a torque compensation amount calculation unit 302c and an adder 804c. The torque correction unit 110c computes the torque compensation amount ∆Trq-mag* on the basis of the magnet temperature Tmag, the d-axis current command value Idc*, and the q-axis current command value Iqc* in the torque compensation amount calculation unit 302c, and outputs a calculation result obtained by adding the torque compensation amount ∆Trq-mag* to the torque command Tm* as the torque command correction value Trq**.

The torque compensation amount calculation unit 302c can be realized if the fluctuation amount of the output torque due to the change in the magnet temperature of the permanent-magnet synchronous machine at the same id and iq current operating point using the reference temperature TmagO as a reference instead of the torque correction coefficient Ktemp* to be output is computed in the torque correction coefficient calculation unit 301 or 301b, and is output as the torque compensation amount ∆Trq-mag*.

As described above, according to the embodiment, the torque command value is corrected on the basis of the magnet temperature and the current command value of the permanent-magnet synchronous machine, so that the output torque fluctuation due to the change in magnet temperature is compensated. Accordingly, the torque accuracy and the torque control response when the magnet temperature fluctuates can be improved with a simpler configuration.

[Second Embodiment]

In the second embodiment, in the calculation of the d-axis current command value Idc* and the q-axis current command value Iqc*, the magnetic flux amount limit value λlim is computed on the basis of the magnet temperature Tmag of the permanent-magnet synchronous machine 103 output from the temperature detection unit 125 in addition to the voltage detection value Ecf of the smoothing capacitor 131 and the drive frequency ω1 of the permanent-magnet synchronous machine 103 output from the vector control unit 112. Accordingly, it is possible to calculate the optimum d-axis current command value Idc* and q-axis current command value Iqc* in consideration of the fluctuation of the output voltage due to the change in magnet temperature as compared to the first embodiment, and the drive device for the permanent-magnet synchronous machine that can operate more efficiently than the first embodiment can be realized.

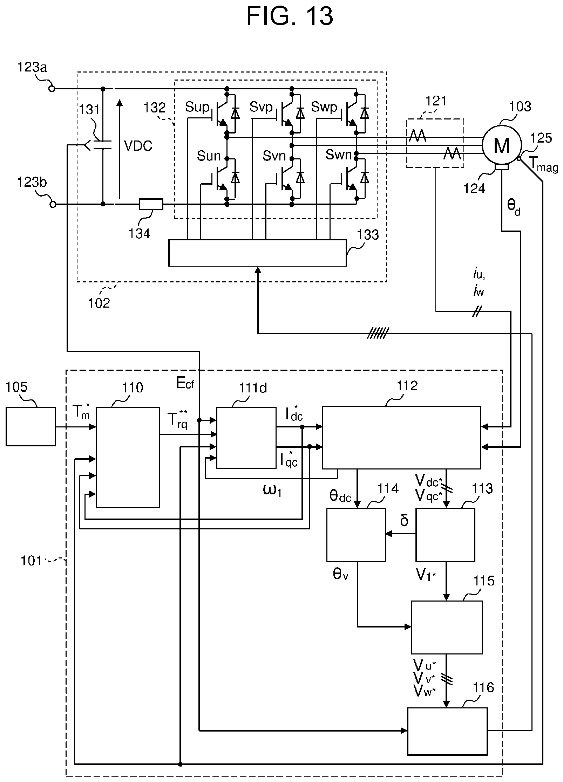

Fig. 13 is a block diagram for showing a configuration example of a drive system for a permanent-magnet synchronous machine of a second embodiment. In the description of the second embodiment, only different parts will be described in comparison with the first embodiment shown in Fig. 1.

In Fig. 13, the drive device for the permanent-magnet synchronous machine of the second embodiment can be realized by using a current command calculation unit 111d instead of the current command calculation unit 111 of the first embodiment in Fig. 1.

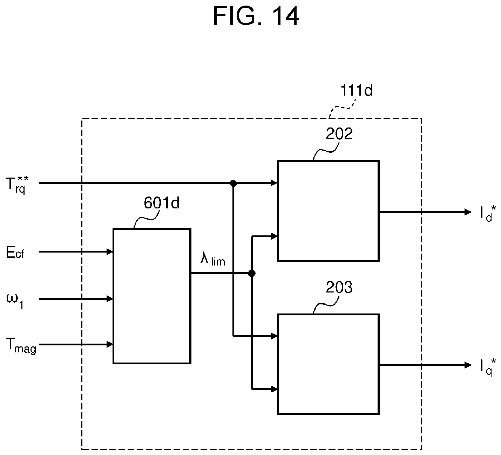

Fig. 14 is a block diagram for showing a configuration example of the current command calculation unit 111d of the second embodiment. As shown in Fig. 14, the current command calculation unit 111d includes a magnetic flux amount limit value calculation unit 601d, the d-axis current command calculation unit 202, and the q-axis current command calculation unit 203.

The magnetic flux amount limit value calculation unit 601d calculates the magnetic flux amount limit value λlim on the basis of the voltage detection value Ecf of the smoothing capacitor 131, the drive frequency ω1 of the permanent-magnet synchronous machine 103 output from the vector control unit 112, and the magnet temperature Tmag of the permanent-magnet synchronous machine 103 output from the temperature detection unit 125, and outputs the same to the d-axis current command calculation unit 202 and the q-axis current command calculation unit 203.

In the magnetic flux amount limit value calculation unit 601d, the magnetic flux amount limit value Alim that is an input variable of the d-axis current command calculation unit 202 and the q-axis current command calculation unit 203 may be obtained by adding a correction value in accordance with an increase or decrease in magnet magnetic flux caused by a change in magnet temperature to the ratio of the voltage detection value Ecf to the drive frequency ω1. For example, the following Equation (5) is used for calculation.

[Equation 5]

$$\lambda_{lim} = \frac{E_{cf}}{\omega_1} \cdot \frac{2}{\pi} + K_v \cdot \left(T_{mag} - T_{mag0}\right) \quad \cdot \cdot \cdot \quad (5)$$

In Equation (5), the magnet temperature Tmag of the permanent-magnet synchronous machine, the reference temperature TmagO set in the calculation of the d-axis current command calculation unit 202 and the q-axis current command calculation unit 203, and the first term on the right side calculated on the basis of the correction coefficient Kv correspond to the correction value of the magnetic flux amount limit value in accordance with an increase or decrease in the magnet magnetic flux due to the change in magnet temperature. It should be noted that the correction coefficient Kv may be a constant, or may be calculated as a function expression of the magnet temperature Tmag.

In addition, the magnetic flux amount limit value λlim may be obtained by multiplying the ratio of the voltage detection value Ecf to the drive frequency ω1 by a correction coefficient in accordance with the magnet temperature Tmag. For example, the following Equation (6) is used for calculation.

[Equation 6]

$$\lambda_{lim} = \frac{E_{cf}}{\omega_1} \cdot \frac{2}{\pi} \cdot K_v' \frac{T_{mag}}{T_{mag0}} \quad \cdot \cdot \cdot \quad (6)$$

It should be noted that in Equation (6), the correction coefficient Kv' may be a constant, or may be calculated as a function expression of the magnet temperature Tmag.

The current command calculation unit 111d of the second embodiment has the same configuration as that of the current command calculation unit 111 of the first embodiment except for the magnetic flux amount limit value calculation unit 601d.

Therefore, in the second embodiment, the calculation of the d-axis current command and the q-axis current command in consideration of the fluctuation of the output voltage due to the change in magnet temperature can be realized by adjusting the magnetic flux amount limit value λlim on the basis of the magnet temperature, and it is possible to achieve the high efficiency of the drive device for the permanent-magnet synchronous machine.

[Third Embodiment]

In the third embodiment, in the calculation of the d-axis current command value Idc* and the q-axis current command value Iqc*, the magnetic flux amount limit value λlim is computed on the basis of a target limit modulation factor Ymf* for controlling an output voltage limit value V1lim of the power converter 102 in addition to the voltage detection value Ecf of the smoothing capacitor 131 and the drive frequency ω1 of the permanent-magnet synchronous machine 103 output from the vector control unit 112. Accordingly, it is possible to calculate the optimum d-axis current command value Idc* and q-axis current command value Iqc* in consideration of the fluctuation of the output voltage maximum value due to changes in the specifications and constraints of the maximum output voltage of the power converter 102 and the maximum modulation factor of the PWM control, and the drive device for the permanent-magnet synchronous machine that can operate more efficiently than the first embodiment can be realized.

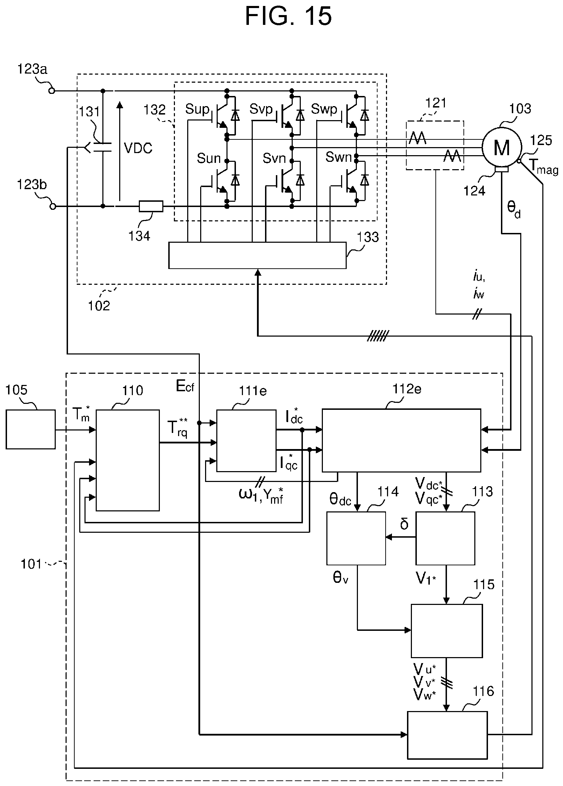

Fig. 15 is a block diagram for showing a configuration example of a drive system for a permanent-magnet synchronous machine of a third embodiment. Only different parts will be described in comparison with the first embodiment shown in Fig. 1.

In Fig. 15, the drive device for the permanent-magnet synchronous machine of the third embodiment can be realized by using a current command calculation unit 111e and a vector control unit 112e instead of the current command calculation unit 111 and the vector control unit 112 of the first embodiment in Fig. 1.

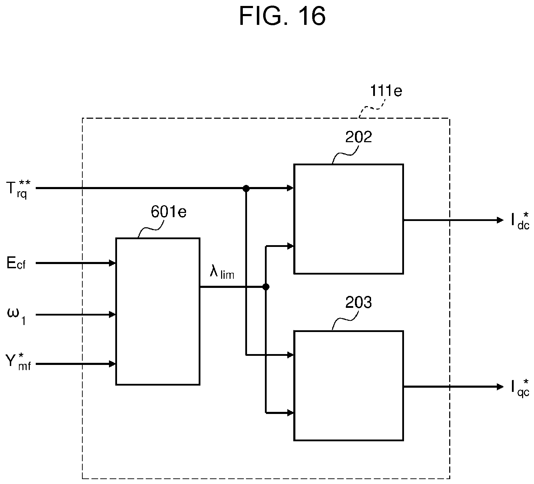

Fig. 16 is a block diagram for showing a configuration example of the current command calculation unit 111e of the third embodiment. As shown in Fig. 16, the current command calculation unit 111e includes a magnetic flux amount limit value calculation unit 601e, a d-axis current command calculation unit 202, and a q-axis current command calculation unit 203.

The magnetic flux amount limit value calculation unit 601e calculates the magnetic flux amount limit value λlim on the basis of the voltage detection value Ecf of the smoothing capacitor 131, the drive frequency ω1 of the permanent-magnet synchronous machine 103 output from the vector control unit 112e, and the target limit modulation factor Ymf* for controlling the output voltage limit value V1lim of the power converter 102 output from the vector control unit 112e, and outputs the same to the d-axis current command calculation unit 202 and the q-axis current command calculation unit 203. The output voltage control value V1lim is calculated by, for example, the following Equation (7).

[Equation 7]

$$V_{1lim} = \frac{E_{cf0}}{2} \cdot \frac{4}{\pi} \cdot Y_{mf}^* \quad \cdot \cdot \cdot \quad (7)$$

It should be noted that in the case where the target limit modulation factor Ymf* is set to a value equal to or smaller than 1 and the power converter 102 performs PWM control with one synchronous pulse for obtaining an output voltage maximum value, the target limit modulation factor Ymf* becomes 1. In addition, Ecf0 is a reference value of the DC voltage of the smoothing capacitor 131 for determining the output voltage control value V1lim.

The target limit modulation factor Ymf* may be, for example, a target modulation factor based on a target voltage value of field-weakening control in the case where the field-weakening control is performed by the vector control unit 112e in order to control the output voltage limit value V1lim. Alternatively, the target limit modulation factor Ymf* may be a target modulation factor determined from the operating conditions of the PWM control.

Therefore, the magnetic flux amount limit value $\lambda$lim that is an input variable of the d-axis current command calculation unit 202 and the q-axis current command calculation unit 203 in the magnetic flux amount limit value calculation unit 601d may be obtained by multiplying the ratio of the voltage detection value Ecf to the drive frequency $\omega$1 by the target limit modulation factor Ymf* of the power converter 102. For example, the following Equation (8) is used for calculation.

[Equation 8]

$$\lambda_{lim} = \frac{E_{cf}}{\omega_1} \cdot \frac{2}{\pi} \cdot Y_{mf}^* \quad \cdot \cdot \cdot \quad (8)$$

The current command calculation unit 111e of the second embodiment has the same configuration as that of the current command calculation unit 111 of the first embodiment except for the magnetic flux amount limit value calculation unit 601e.

Therefore, in the third embodiment, the calculation of the d-axis current command and the q-axis current command in consideration of the output voltage of the power converter and the fluctuation of the output voltage due to the restriction of the PWM control calculation can be realized by adjusting the magnetic flux amount limit value $\lambda$lim on the basis of the limit value of the output voltage of the power converter 102, and it is possible to achieve the high efficiency of the drive device for the permanent-magnet synchronous machine in accordance with the specifications, performance, and operating conditions of the power converter and the controller.

[Fourth Embodiment]

In the fourth embodiment, in the calculation of the d-axis current command value Idc* and the q-axis current command value Iqc*, a three-dimensional table computed in advance by a test or simulation analysis on the basis of the voltage detection value Ecf of the smoothing capacitor 131, the drive frequency $\omega$1 of the permanent-magnet synchronous machine 103 output from the vector control unit 112, and the torque command correction value Trq** output from the torque correction unit 110 is used. Accordingly, it is possible to calculate the d-axis current command value Idc* and the q-axis current command value Iqc* that are more optimum for the changes in the torque command, the rotational speed, and the power supply voltage than the first embodiment, and the drive device for the permanent-magnet synchronous machine that can operate more efficiently than the first embodiment can be realized.

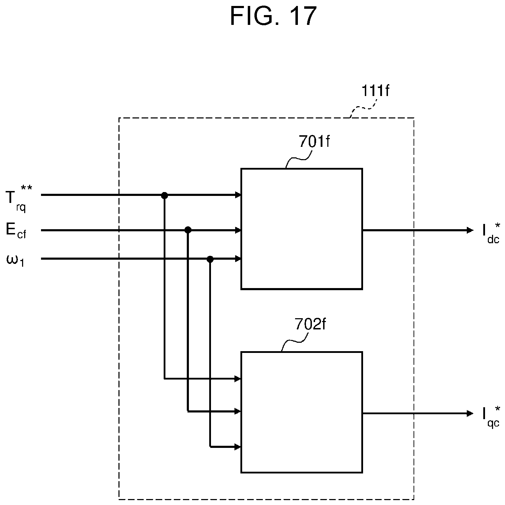

Fig. 17 is a block diagram for showing a configuration example of a current command calculation unit 111f of the fourth embodiment. The drive device for the permanent-magnet synchronous machine of the fourth embodiment can be realized by using the current command calculation unit 111f instead of the current command calculation unit 111 of the first embodiment in Fig. 1. Only different parts of the configuration will be described in comparison with the first embodiment shown in Fig. 1.

In Fig. 17, the current command calculation unit 111f includes a d-axis current command three-dimensional table reference unit 701f and a q-axis current command three-dimensional table reference unit 702f.

The d-axis current command three-dimensional table calculation unit 701f calculates and outputs the d-axis current command value Idc* on the basis of the voltage detection value Ecf of the smoothing capacitor 131, the drive frequency $\omega$1 of the permanent-magnet synchronous machine 103 output from the vector control unit 112, and the torque command correction value Trq** output from the torque correction unit 110. The q-axis current command three-dimensional table reference unit 702f calculates and outputs the q-axis current command value Iqc* on the basis of the voltage detection value Ecf of the smoothing capacitor 131, the drive frequency $\omega$1 of the permanent-magnet synchronous machine 103 output from the vector control unit 112, and the torque command correction value Trq** output from the torque correction unit 110.

The three-dimensional table data used for the computation of the d-axis current command value Idc* and the q-axis current command value Iqc* in the d-axis current command three-dimensional table calculation unit 701f and the q-axis current command three-dimensional table reference unit 702f can be realized by previously obtaining the d-axis current command and the q-axis current command optimum for the changes in the torque command, the rotational speed, and the power supply voltage using the reference temperature TmagO of the permanent magnet as the set value of the magnet temperature condition by a tests, simulation analysis, or the like.

It should be noted that in the fourth embodiment, the d-axis current command value Idc* and the q-axis current command are computed for the changes in the torque command, the rotational speed, and the power supply voltage by using the three-dimensional table data, but may be obtained by using an arithmetic expression.

Therefore, in the fourth embodiment, the calculation of the d-axis current command value Idc* and the q-axis current command value Iqc* optimum for the changes in the torque command, the rotational speed, and the power supply voltage can be realized by calculating the d-axis current command and the q-axis current command on the basis of the three-dimensional table data obtained in advance by a test, analysis, or the like, and it is possible to achieve the high efficiency of the drive device for the permanent-magnet synchronous machine.

[Fifth Embodiment]

In a fifth embodiment, in the calculation of the torque command correction value Trq**, the torque correction coefficient Ktemp* is computed on the basis of the magnet temperature Tmag of the permanent-magnet synchronous machine 103 detected by the temperature detection unit 125 and the d-axis current command value Idc* output from the current command calculation unit 111. As a result, the torque command correction value Trq** for the change in magnet temperature can be calculated without using the multidimensional table, and it is possible to realize the drive device of the permanent-magnet synchronous machine that is less in the calculation load of the control device than that of the first embodiment and can save memory capacity.

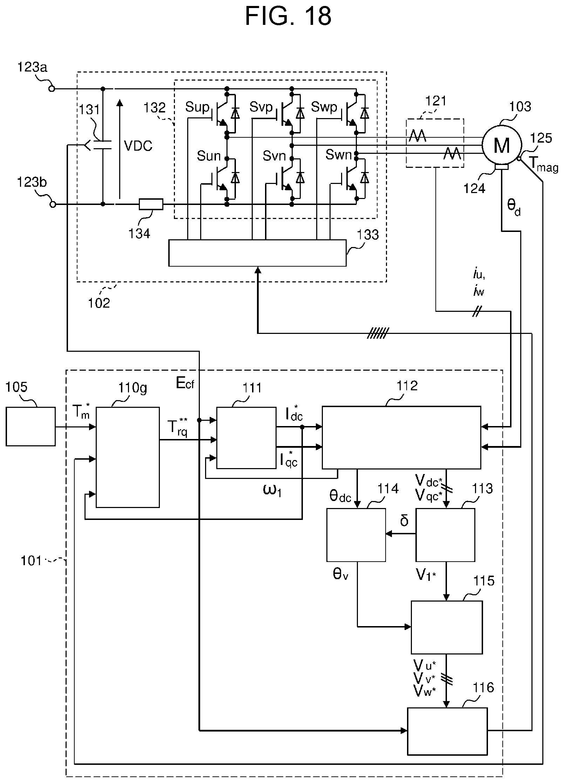

Fig. 18 is a block diagram for showing a configuration example of a drive system for a permanent-magnet synchronous machine of a fifth embodiment. In the description of the fifth embodiment, only different parts will be described in comparison with the first embodiment shown in Fig. 1.

In Fig. 18, the drive device for the permanent-magnet synchronous machine of the fifth embodiment can be realized by using a torque correction unit 110g instead of the torque correction unit 110 of the first embodiment in Fig. 1.

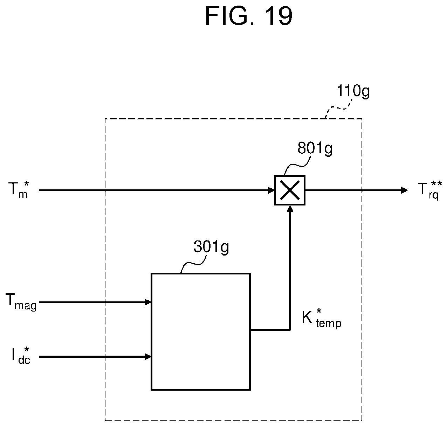

Fig. 19 is a block diagram for showing a configuration example of the torque correction unit 110g of the fifth embodiment. As shown in Fig. 19, the torque correction unit 110g includes a torque correction coefficient calculation unit 301g and a multiplier 801g. The torque correction unit 110g outputs, as the torque command correction value Trq**, a calculation result obtained by multiplying the torque command Tm* by the torque correction coefficient Ktemp* output from the torque correction coefficient calculation unit 301g.

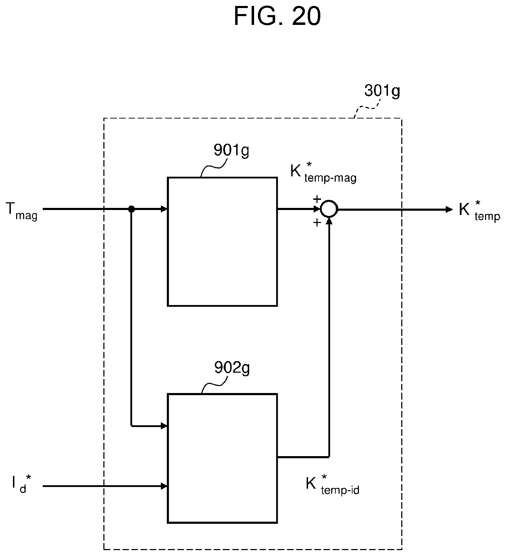

Fig. 20 is a block diagram for showing a configuration example of the torque correction coefficient calculation unit 301g of the fifth embodiment. As shown in Fig. 20, the torque correction coefficient calculation unit 301g includes a magnet temperature compensation coefficient calculation unit 901g and a d-axis current characteristic compensation coefficient calculation unit 902g. The torque correction coefficient calculation unit 301g calculates and outputs the torque correction coefficient Ktemp* on the basis of the magnet temperature Tmag of the permanent-magnet synchronous machine 103 detected by the temperature detection unit 125 and the d-axis current command value Idc* output from the current command calculation unit 111.

The magnet temperature compensation coefficient calculation unit 901g computes, on the basis of the magnet temperature Tmag, a coefficient corresponding to the amount of change in output torque due to a change in magnet temperature using the reference temperature TmagO as a reference, and outputs the same as a torque correction coefficient Ktemp-mag*.

Hereinafter, the d-axis current characteristic compensation coefficient calculation unit 902g that is a characteristic part of the fifth embodiment of the present invention will be described in detail.

Although the ratio of the output torque at the reference temperature TmagO to the output torque at the magnet temperature higher than the reference temperature TmagO is shown in Fig. 9 as a table map of the d-axis current id and the q-axis current iq and is used as correction means for torque commands in the first embodiment, it can be understood that the magnitude of the output torque ratio based on the temperature change of the permanent magnet has a stronger correlation with the magnitude of the d-axis current than that of the q-axis current as shown in FIG. 9.

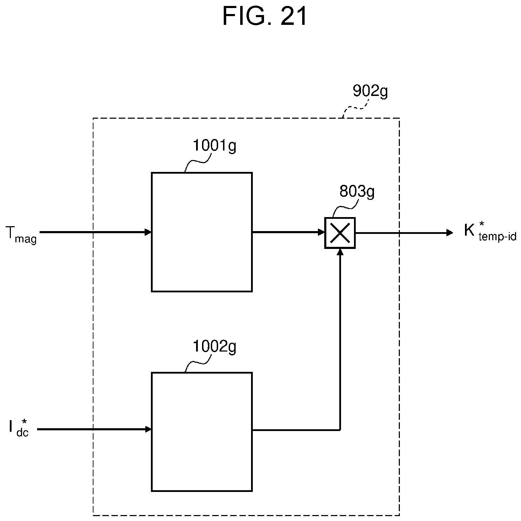

Fig. 21 is a block diagram for showing a configuration example of the d-axis current characteristic compensation coefficient calculation unit 902g of the fifth embodiment. As shown in Fig. 21, the d-axis current characteristic compensation coefficient calculation unit 902g includes a d-axis current characteristic magnet temperature correction coefficient calculation unit 1001g, a d-axis current characteristic coefficient calculation unit 1002g, and a multiplier 803g. On the basis of the d-axis current command value Idc* and the magnet temperature Tmag, the d-axis current characteristic compensation coefficient calculation unit 902g computes a coefficient corresponding to the amount of change in the ratio of magnet torque to reluctance at arbitrary current operating points of Idc* and Iqc* due to a change in magnet temperature using the reference temperature TmagO as a reference, and outputs the same as a torque correction coefficient Ktemp-id*.

On the basis of the reference temperature TmagO, the d-axis current characteristic magnet temperature correction coefficient calculation unit 1001g outputs a coefficient for correcting the fluctuation of the characteristic amount of the output torque ratio dependent on the d-axis current according to the magnet temperature to the multiplier 803b. The d-axis current characteristic coefficient calculation unit 1002g calculates a coefficient for correcting the amount of change of the output torque ratio dependent on the d-axis current on the basis of the d-axis current command value Idc*, and outputs the same to the multiplier 803b.

As described above, the d-axis current characteristic compensation coefficient calculation unit 902g can calculate the torque correction coefficient Ktemp-id* without using the multidimensional table.

Therefore, in the fifth embodiment, the coefficient corresponding to the change in the ratio of magnet torque to reluctance torque due to the changes in the temperature of the permanent magnet and the operating conditions is calculated on the basis of the d-axis current command and the magnet temperature, so that the calculation of the torque command correction value can be realized without using the multidimensional table, and the calculation load of the drive device for the permanent-magnet synchronous machine can be reduced and the memory capacity can be saved.

The fifth embodiment has been described above. Although the fifth embodiment has been described by mainly using the first embodiment for the purpose of description, the second to fourth embodiments can be similarly applied as the basic configurations.

[Sixth Embodiment]

In a sixth embodiment, in addition to compensation of an output torque error due to a change in the temperature of the permanent magnet, the torque command is compensated by using the output loss of the drive device such as the mechanical loss and the iron loss of the permanent-magnet synchronous machine as loss torque, so that the drive device for the permanent-magnet synchronous machine that can perform torque control with higher accuracy than in the first embodiment can be realized.

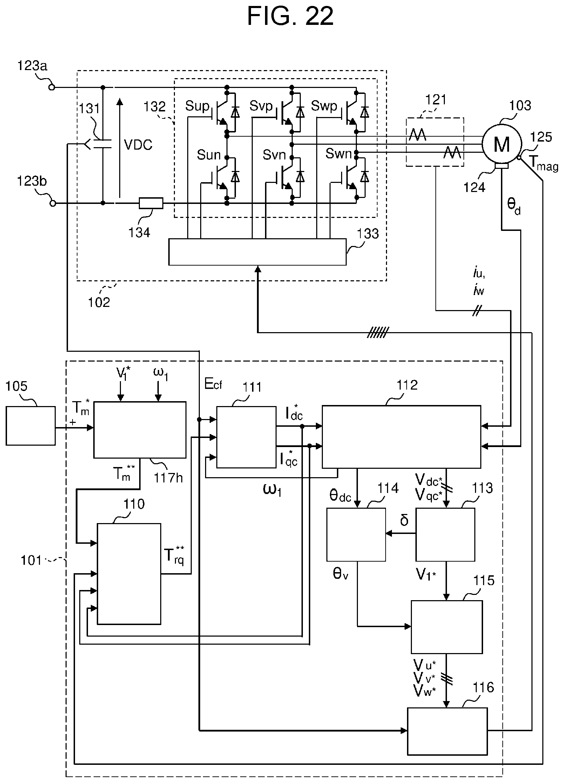

Fig. 22 is a block diagram for showing a configuration example of a drive system for a permanent-magnet synchronous machine of the sixth embodiment. Only different parts will be described in comparison with the first embodiment shown in Fig. 1.

In Fig. 22, the drive device for the permanent-magnet synchronous machine of the sixth embodiment can be realized by adding a torque command loss compensation unit 117h to the first embodiment in Fig. 1.

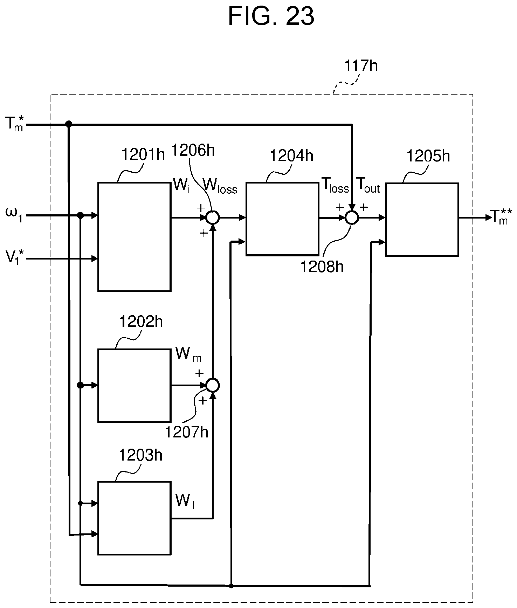

Fig. 23 is a block diagram for showing a configuration example of the torque command loss compensation unit 117h of the sixth embodiment. As shown in Fig. 23, the torque command loss compensation unit 117h includes an iron loss calculation unit 1201h, a mechanical loss calculation unit 1202h, a load loss calculation unit 1203h, a loss torque conversion unit 1204h, an output adjustment unit 1205h, and adders 1206h, 1207h, and 1208h.

The iron loss calculation unit 1201h calculates and outputs an iron loss Wi on the basis of the drive frequency ω1 of the permanent-magnet synchronous machine 103 output from the vector control unit 112 and the voltage amplitude command value V1* output from the polar coordinate conversion unit 113.

The mechanical loss calculation unit 1202h calculates and outputs a mechanical loss Wm on the basis of the drive frequency ω1 of the permanent-magnet synchronous machine 103 output from the vector control unit 112.

The load loss calculation unit 1203h calculates and outputs a load loss Wl on the basis of the torque command Tm* output from the command generator 105 and the drive frequency ω1 of the permanent-magnet synchronous machine 103 output from the vector control unit 112.

The adders 1206h and 1207h add the iron loss Wi output from the iron loss calculation unit 1201h, the mechanical loss Wm output from the mechanical loss calculation unit 1202h, and the load loss Wl output from the load loss calculation unit 1203h, and output an output loss Wloss.

The loss torque conversion unit 1204h converts the output loss Wloss into torque on the basis of the drive frequency ω1 of the permanent-magnet synchronous machine 103 output from the vector control unit 112, and outputs a loss torque Tloss.

The adder 1208h adds the loss torque Tloss output from the loss torque conversion unit 1204h to the torque command Tm* output from the command generator 105, and outputs a motor output torque Tout.

The output adjustment unit 1205h calculates a torque command Tm** on the basis of the motor output torque Tout output from the adder 1208h and the drive frequency ω1 of the permanent-magnet synchronous machine 103 output from the vector control unit 112, and outputs the same to the torque correction unit 110.

Hereinafter, the iron loss calculation unit 1201h, the mechanical loss calculation unit 1202h, the load loss calculation unit 1203h, the loss torque conversion unit 1204h, and the output adjustment unit 1205h that are characteristic parts of the sixth embodiment will be described in detail.

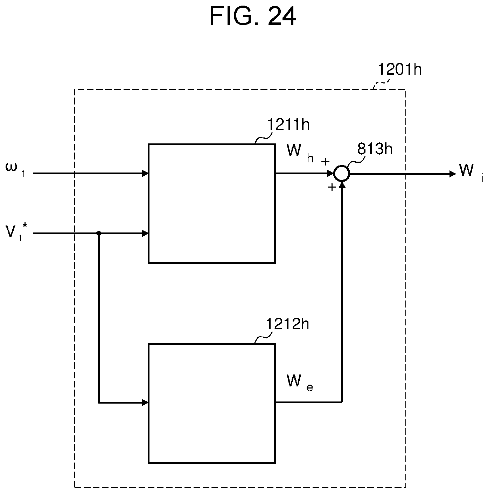

Fig. 24 is a block diagram for showing a configuration example of the iron loss calculation unit 1201h of the sixth embodiment. As shown in Fig. 24, the iron loss calculation unit 1201h includes a hysteresis loss calculation unit 1211h, an eddy current loss calculation unit 1212h, and an adder 813h.

The hysteresis loss calculation unit 1211h calculates and outputs a hysteresis loss Wh on the basis of the drive frequency ω1 of the permanent-magnet synchronous machine 103 output from the vector control unit 112 and the voltage amplitude command value V1* output from the polar coordinate conversion unit 113. The hysteresis loss Wh is calculated by, for example, the following Equation (9).

[Equation 9]

$$W_h = k_h \cdot \left( k_B \cdot \frac{V_1^*}{\omega_1} \right)^{1.6} \cdot \omega_1 \quad \cdot \ \cdot \ \cdot \quad (\,9\,)$$

It should be noted that a hysteresis loss coefficient kh and a magnetic flux density coefficient kB are values determined on the basis of the material and structure of the permanent-magnet synchronous machine 103, and any of a design value, an analysis value, and an actual measurement value may be used. In addition, the hysteresis loss calculation unit 1211h may be configured to use a two-dimensional table for outputting the hysteresis loss Wh obtained in advance from actual measurement or analysis by using the drive frequency ω1 and the voltage amplitude command value V1* as input variables.

The eddy current loss calculation unit 1212h calculates and outputs an eddy current loss We on the basis of the voltage amplitude command value V1* output from the polar coordinate conversion unit 113. The eddy current loss We is calculated by, for example, the following Equation (10).

[Equation 10]

$$W_e = k_e \cdot (k_B \cdot V_1^*)^2 \quad \cdot \ \cdot \ \cdot \quad (\,1\,0\,)$$

It should be noted that an eddy current loss coefficient ke and the magnetic flux density coefficient kB are values determined on the basis of the material and structure of the permanent-magnet synchronous machine 103, and any of a design value, an analysis value, and an actual measurement value may be used. In addition, the eddy current loss calculation unit 1212h may be configured to use a one-dimensional table for outputting the eddy current loss We obtained in advance from actual measurement or analysis by using the voltage amplitude command value V1* as an input variable.

The adder 813h adds the hysteresis loss Wh output from the hysteresis loss calculation unit 1211h and the eddy current loss We output from the eddy current loss calculation unit 1212h, and outputs the iron loss Wi.

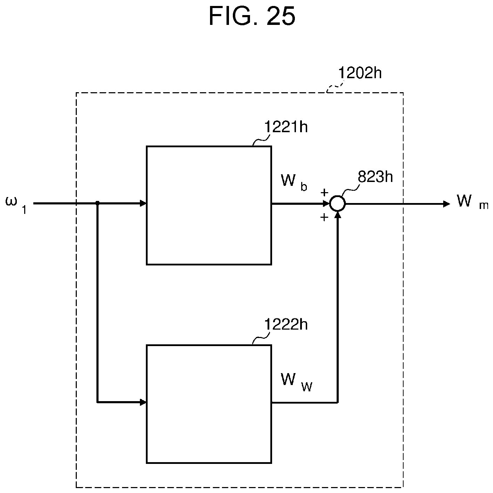

Fig. 25 is a block diagram for showing a configuration example of the mechanical loss calculation unit 1202h of the sixth embodiment. As shown in Fig. 25, the mechanical loss calculation unit 1202h includes a bearing loss calculation unit 1221h, a wind loss calculation unit 1222h, and an adder 823h.

The bearing loss calculation unit 1221h calculates and outputs a bearing loss Wb on the basis of the drive frequency ω1 (electric angular frequency) of the permanent-magnet synchronous machine 103 output from the vector control unit 112. The bearing loss Wb has a characteristic proportional to the first power of the motor rotational speed (machine angular frequency), and is calculated by, for example, the following Equation (11).

[Equation 11]

$$W_b = k_b \cdot \frac{\omega_1}{P_m} \quad \cdot \ \cdot \ \cdot \quad (\,1\,1\,)$$

It should be noted that a bearing loss coefficient kb is a value determined on the basis of the material and structure of a bearing portion of the permanent-magnet synchronous machine 103, and any of a design value, an analysis value, and an actual measurement value may be used. In addition, the bearing loss calculation unit 1221h may be configured to use a one-dimensional table for outputting the bearing loss Wb obtained in advance from actual measurement or analysis by using the drive frequency ω1 (electric angular frequency) or the motor rotational speed (machine angular frequency) as an input variable.

The wind loss calculation unit 1222h calculates and outputs a wind loss Ww on the basis of the drive frequency ω1 (electric angular frequency) of the permanent-magnet synchronous machine 103 output from the vector control unit 112. The wind loss Ww has a characteristic proportional to the cube of the motor rotational speed (machine angular frequency) and is calculated by, for example, the following Equation (12).

[Equation 12]

$$W_w = k_w \cdot \left(\frac{\omega_1}{P_m}\right)^3 \quad \cdot \cdot \cdot \quad (1\,2)$$

It should be noted that a wind loss coefficient kw is a value determined on the basis of the material and structure of a rotating portion of the permanent-magnet synchronous machine 103, the frictional resistance with air, and the like, and any of a design value, an analysis value, and an actual measurement value may be used. In addition, the wind loss calculation unit 1222h may be configured to use a one-dimensional table for outputting the wind loss Ww obtained in advance from actual measurement or analysis by using the drive frequency ω1 (electric angular frequency) or the motor rotational speed (machine angular frequency) as an input variable.

The adder 823h adds the bearing loss Wb output from the bearing loss calculation unit 1221h and the wind loss Ww output from the wind loss calculation unit 1222h, and outputs the mechanical loss Wm.

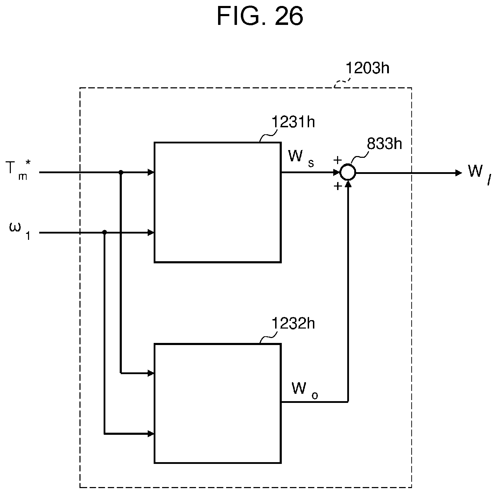

Fig. 26 is a block diagram for showing a configuration example of the load loss calculation unit 1203h of the sixth embodiment. As shown in Fig. 26, the load loss calculation unit 1203h includes a stray load loss calculation unit 1231h, an external load loss calculation unit 1232h, and an adder 833h.

The stray load loss calculation unit 1231h calculates and outputs a stray load loss Ws on the basis of the torque command Tm* output from the command generator 105 and the drive frequency ω1 of the permanent-magnet synchronous machine 103 output from the vector control unit 112. In general, the stray load loss is a loss that is not included in the copper loss, the iron loss, and the mechanical loss, and is a slight loss that is difficult to compute accurately. The stray load loss Ws is calculated by, for example, the following Equation (13).

[Equation 13]

$$W_s = k_s \cdot \frac{\omega_1}{P_m} \cdot T_m^* \quad \cdot \cdot \cdot \quad (1\,3)$$

It should be noted that a stray load loss coefficient ks can be set to an arbitrary value. For example, the value is determined by the following Equation (14) using a rated output Pr of the permanent-magnet synchronous machine 103.

[Equation 14]

$$k_s = \frac{0.005}{P_r} \quad \cdot \cdot \cdot \quad (1\,4)$$

In addition, the stray load loss calculation unit 1231h may be configured to use a two-dimensional table for outputting the stray load loss Ws obtained in advance from actual measurement or analysis by using the torque command Tm* and the drive frequency ω1 as input variables.

The external load loss calculation unit 1232h calculates and outputs an external load loss Wo on the basis of the torque command Tm* output from the command generator 105 and the drive frequency ω1 of the permanent-magnet synchronous machine 103 output from the vector control unit 112. The external load loss Wo is used to compensate the fluctuation of the load state of the load characteristic connected to the permanent-magnet synchronous machine 103 according to the output torque and the rotational speed, and is determined according to the type and application of the load of the drive device such as a constant torque load of a conveyor, a crane, or the like, a square reduction load of a fan, a pump, or the like, or a constant output load of a winding machine or the like.

The external load loss calculation unit 1232h can be realized with a configuration using a two-dimensional table for outputting the external load loss Wo obtained in advance from actual measurement or analysis by using the torque command Tm* and the drive frequency ω1 as input variables. It should be noted that in the case where these load characteristics are considered in the torque command Tm* output from the command generator 105, the external load loss Wo may be set to 0.

The adder 833h adds the stray load loss Wr output from the stray load loss calculation unit 1231h and the external load loss Wo output from the external load loss calculation unit 1232h, and outputs the load loss Wi.

The loss torque conversion unit 1204h calculates and outputs the loss torque Tloss on the basis of the output loss Wloss that is the total value of the iron loss Wi, the mechanical loss Wm, and the load loss Wl and the drive frequency ω1 of the permanent-magnet synchronous machine 103 output from the vector control unit 112. The loss torque Tloss is calculated by, for example, the following Equation (15).

[Equation 15]

$$T_{loss} = \frac{W_{loss}}{\left(\frac{\omega_1}{P_m}\right)} \quad \cdot \cdot \cdot \quad (15)$$

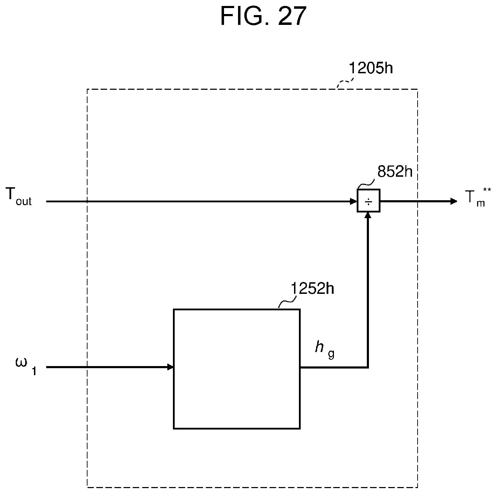

Fig. 27 is a block diagram for showing a configuration example of the output adjustment unit 1205h of the sixth embodiment. As shown in Fig. 27, the output adjustment unit 1205h includes a gear efficiency calculation unit 1252h and a divider 852h.

The gear efficiency calculation unit 1252h calculates and outputs a gear efficiency ηg on the basis of the drive frequency ω1 of the permanent-magnet synchronous machine 103 output from the vector control unit 112. The gear efficiency ηg may be configured to use a one-dimensional table for outputting the gear efficiency ηg obtained in advance from actual measurement or analysis by using, for example, the drive frequency ω1 as an input variable. In addition, the gear efficiency ηg may be used as a constant or may be calculated as a function expression of the drive frequency ω1.

It should be noted that the gear efficiency ηg is a value determined on the basis of the frictional resistance of bearings or gears of the permanent-magnet synchronous machine 103, the resistance of a lubricating oil, or the like, and any of a design value, an analysis value, and an actual measurement value may be used. In addition, in the case of a device configuration having no gear between the permanent-magnet synchronous machine 103 and a load connected to the permanent-magnet synchronous machine 103, the output adjustment unit 1205h may be excluded from the torque command loss compensation unit 117h or the gear efficiency ηg output from the gear efficiency calculation unit 1252h may be always set to 1.

The divider 852h divides the motor output torque Tout that is the total value of the torque command Tm* and the loss torque Tloss by the gear efficiency ηg output from the gear efficiency calculation unit 1252h, and outputs the torque command Tm**.

Therefore, in the sixth embodiment, the calculation of the torque command correction value in consideration of the loss torque of the drive device for the permanent-magnet synchronous machine can be realized, and the high accuracy of the torque control of the drive device for the permanent-magnet synchronous machine can be realized.

It should be noted that one or more of the hysteresis loss Wh, the eddy current loss We, the bearing loss Wb, the wind loss Ww, the stray load loss Ws, and the external load loss Wo are used in the calculation of the output loss Wloss, so that the reduction of the output torque of the motor due to the loss torque to the torque command is compensated, and the high accuracy of the torque control can be realized.

In addition, the iron loss calculation unit 1201h of the sixth embodiment can be also realized by using the d-axis current command value Idc* and the q-axis current command value Iqc* output from the current command calculation unit 111 instead of the voltage amplitude command value V1* output from the polar coordinate conversion unit 113.

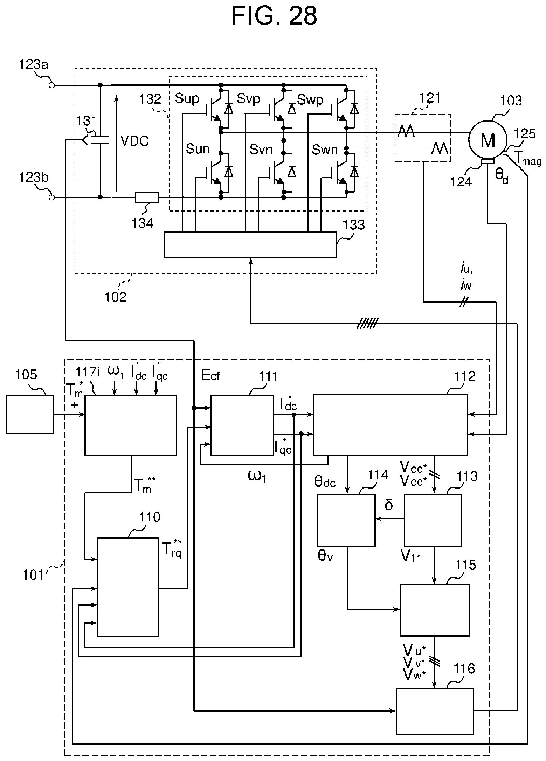

Fig. 28 is a block diagram for showing a configuration example of a drive system for a permanent-magnet synchronous machine as a modified example of the sixth embodiment. In the sixth embodiment, only different parts of the configuration will be described in comparison with the configuration example of the sixth embodiment shown in Fig. 22.

In Fig. 28, the modified example of the configuration of the drive device for the permanent-magnet synchronous machine of the sixth embodiment can be realized by using a torque command loss compensation unit 117i instead of the torque command loss compensation unit 117h of the sixth embodiment in Fig. 22.

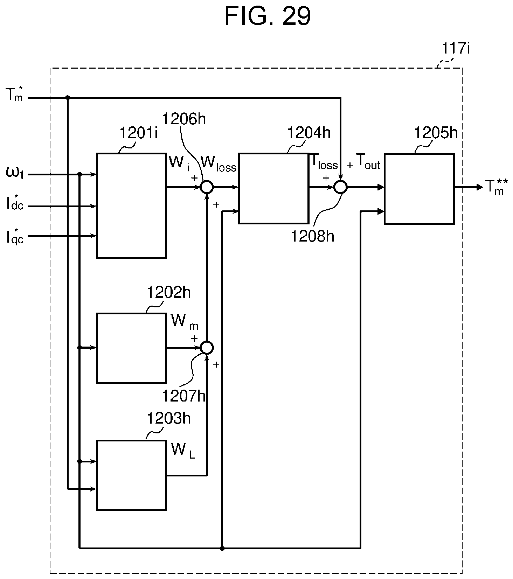

Fig. 29 is a block diagram for showing a configuration example of the torque command loss compensation unit 117i as the modified example of the sixth embodiment. As shown in Fig. 29, the torque command loss compensation unit 117i can be realized by using an iron loss calculation unit 1201i instead of the iron loss calculation unit 1201h.

The iron loss calculation unit 1201i calculates and outputs the iron loss Wi on the basis of the drive frequency ω1 of the permanent-magnet synchronous machine 103 output from the vector control unit 112, the d-axis current command value Idc* and the q-axis current command value Iqc* output from the current command calculation unit 111.

Next, the iron loss calculation unit 1201i will be described in detail.

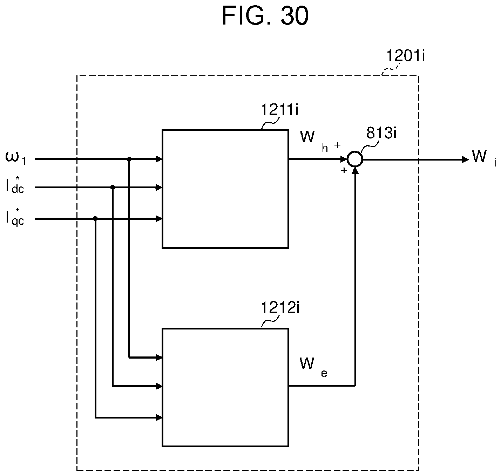

Fig. 30 is a block diagram for showing a configuration example of the iron loss calculation unit 1201i as a modified example of the sixth embodiment. As shown in Fig. 30, the iron loss calculation unit 1201i includes a hysteresis loss calculation unit 1211i, an eddy current loss calculation unit 1212i, and an adder 813i.

The hysteresis loss calculation unit 1211i calculates and outputs the hysteresis loss Wh on the basis of the drive frequency ω1 of the permanent-magnet synchronous machine 103 output from the vector control unit 112, the d-axis current command value Idc* and the q-axis current command value Iqc* output from the current command calculation unit 111.

The hysteresis loss calculation unit 1211i can be realized by using a three-dimensional table for outputting the hysteresis loss Wh obtained in advance from actual measurement or analysis by using, for example, the drive frequency $\omega 1$, the d-axis current command value Idc*, and the q-axis current command value Iqc* as input variables.

The eddy current loss calculation unit 1212i calculates and outputs the eddy current loss We on the basis of the drive frequency $\omega 1$ of the permanent-magnet synchronous machine 103 output from the vector control unit 112, the d-axis current command value Idc* and the q-axis current command value Iqc* output from the current command calculation unit 111.

The eddy current loss calculation unit 1212i can be realized by using a three-dimensional table for outputting the eddy current loss We obtained in advance from actual measurement or analysis by using, for example, the drive frequency $\omega 1$, the d-axis current command value Idc*, and the q-axis current command value Iqc* as input variables.

Further, by normalizing the hysteresis loss Wh and the eddy current loss We by the square of the drive frequency $\omega 1$ in the iron loss calculation unit 1201i, a configuration using a two-dimensional table in which the d-axis current command value Idc* and the q-axis current command value Iqc* are used as input variables can also be realized.

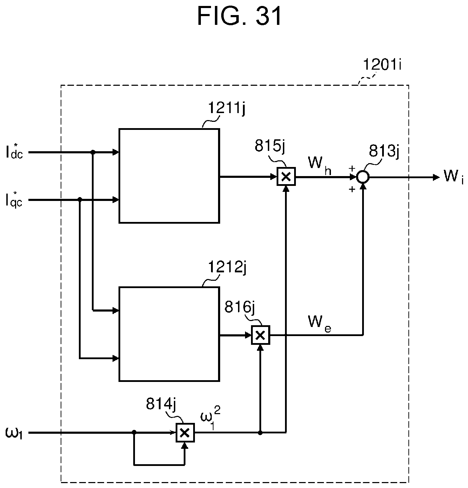

Fig. 31 is a block diagram for showing a configuration example of an iron loss calculation unit 1201j as a modified example of the sixth embodiment. As shown in Fig. 31, the iron loss calculation unit 1201j includes a hysteresis loss frequency normalization value calculation unit 1211j, an eddy current loss frequency normalization value calculation unit 1212j, an adder 813j, and multipliers 814j, 815j, and 816j.

The hysteresis loss frequency normalization value calculation unit 1211j calculates and outputs a hysteresis loss frequency normalization value Wh' on the basis of the d-axis current command value Idc* and the q-axis current command value Iqc* output from the current command calculation unit 111. The hysteresis loss frequency normalization value calculation unit 1211j can be realized by using a two-dimensional table for outputting the hysteresis loss frequency normalization value Wh' obtained by normalizing the hysteresis loss Wh obtained in advance from actual measurement or analysis by using, for example, the d-axis current command value Idc* and the q-axis current command value Iqc* as input variables.

The eddy current loss frequency normalization value calculation unit 1212j calculates and outputs an eddy current loss frequency normalization value We' on the basis of the d-axis current command value Idc* and the q-axis current command value Iqc* output from the current command calculation unit 111. The eddy current loss frequency normalization value calculation unit 1212j can be realized by using a two-dimensional table for outputting the eddy current loss frequency normalization value We' of the eddy current loss We obtained in advance from actual measurement or analysis by using, for example, the d-axis current command value Idc* and the q-axis current command value Iqc* as input variables.

Further, the fluctuation of the hysteresis loss Wh and the eddy current loss We due to the fluctuation of the magnet temperature Tmag of the permanent-magnet synchronous machine 103 is considered in the iron loss calculation unit 1201j, so that the calculation accuracy of the iron loss can be improved.

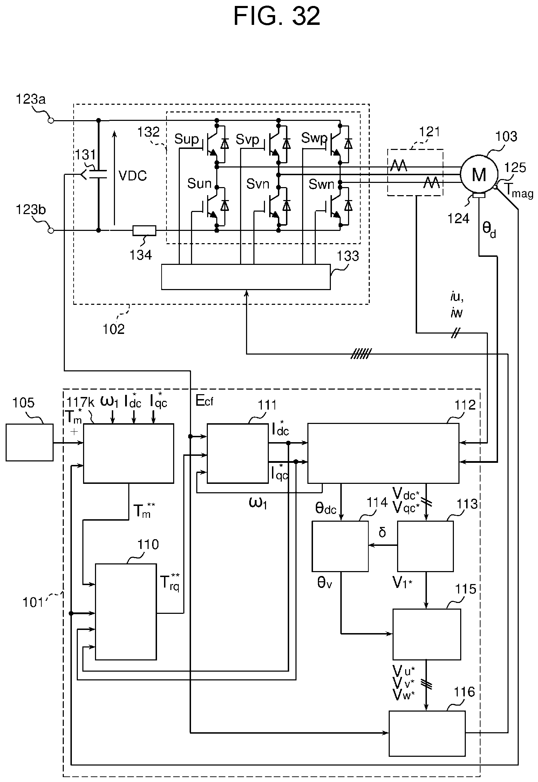

Fig. 32 is a block diagram for showing a configuration example of a drive system for a permanent-magnet synchronous machine as a modified example of the sixth embodiment. Only different parts will be described in comparison with the configuration example of the sixth embodiment shown in Fig. 28.

In Fig. 32, the modified example of the configuration of the drive device for the permanent-magnet synchronous machine of the sixth embodiment can be realized by using a torque command loss compensation unit 117k instead of the torque command loss compensation unit 117i of the sixth embodiment in Fig. 28.

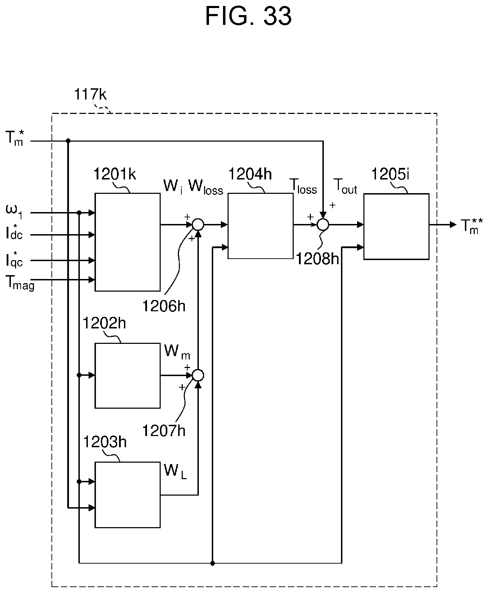

Fig. 33 is a block diagram for showing a configuration example of the torque command loss compensation unit 117k as the modified example of the sixth embodiment. As shown in Fig. 33, the torque command loss compensation unit 117k can be realized by using an iron loss calculation unit 1201k instead of the iron loss calculation unit 1201i.

The iron loss calculation unit 1201k calculates and outputs the iron loss Wi on the basis of the drive frequency $\omega 1$ of the permanent-magnet synchronous machine 103 output from the vector control unit 112, the d-axis current command value Idc* and the q-axis current command value Iqc* output from the current command calculation unit 111, and the magnet temperature Tmag output from the temperature detection unit 125.

It should be noted that the magnitude of the induced voltage in accordance with the rotational speed of the permanent-magnet synchronous machine 103 is detected or estimated, and a value obtained by estimating the magnet temperature Tmag from the magnitude may be used.

Next, the iron loss calculation unit 1201k will be described in detail.

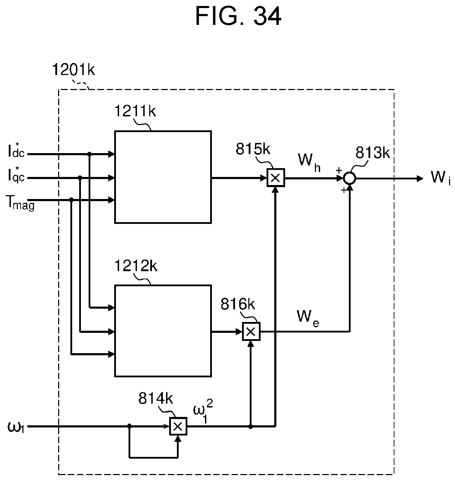

Fig. 34 is a block diagram for showing a configuration example of the iron loss calculation unit 1201k as a modified example of the sixth embodiment. As shown in Fig. 34, the iron loss calculation unit 1201k includes a hysteresis loss frequency normalization value calculation unit 1211k, an eddy current loss frequency normalization value calculation unit 1212k, an adder 813k, and multipliers 814k, 815k, and 816k.

The hysteresis loss frequency normalization value calculation unit 1211k calculates and outputs the hysteresis loss frequency normalization value Wh' on the basis of the d-axis current command value Idc* and the q-axis current command value Iqc* output from the current command calculation unit 111 and the magnet temperature Tmag output from the temperature detection unit 125.

The hysteresis loss frequency normalization value calculation unit 1211k can be realized by using a three-dimensional table for outputting the hysteresis loss frequency normalization value Wh' obtained by normalizing the hysteresis loss Wh obtained in advance from actual measurement or analysis by using, for example, the d-axis current command value Idc*, the q-axis current command value Iqc*, and the magnet temperature Tmag as input variables.

The eddy current loss frequency normalization value calculation unit 1212k calculates and outputs the eddy current loss frequency normalization value We' on the basis of the d-axis current command value Idc* and the q-axis current command value Iqc* output from the current command calculation unit 111 and the magnet temperature Tmag output from the temperature detection unit 125. The eddy current loss frequency normalization value calculation unit 1212k can be realized by using a three-dimensional table for outputting the eddy current loss frequency normalization value We' obtained by normalizing the eddy current loss We obtained in advance from actual measurement or analysis by using, for example, the d-axis current command value Idc*, the q-axis current command value Iqc*, and the magnet temperature Tmag as input variables.

The sixth embodiment has been described above. Although the sixth embodiment has been described by mainly using the first embodiment for the purpose of description, the second to fifth embodiments can be similarly applied as the basic configurations.

[Seventh Embodiment]

In a seventh embodiment, in the calculation of the torque command correction value Trq**, the detection value or estimation value of a magnet magnetic flux Φm of the permanent-magnet synchronous machine 103 or a coefficient corresponding to the magnet magnetic flux Φm is used instead of the detection value or estimation value of the magnet temperature Tmag of the permanent-magnet synchronous machine 103. As a result, even in the case where the permanent-magnet synchronous machine 103 is demagnetized, the torque command correction value Trq** for a change in magnet temperature can be calculated, and a drive device for a permanent-magnet synchronous machine that can perform torque control with higher accuracy than that of the first embodiment can be realized.

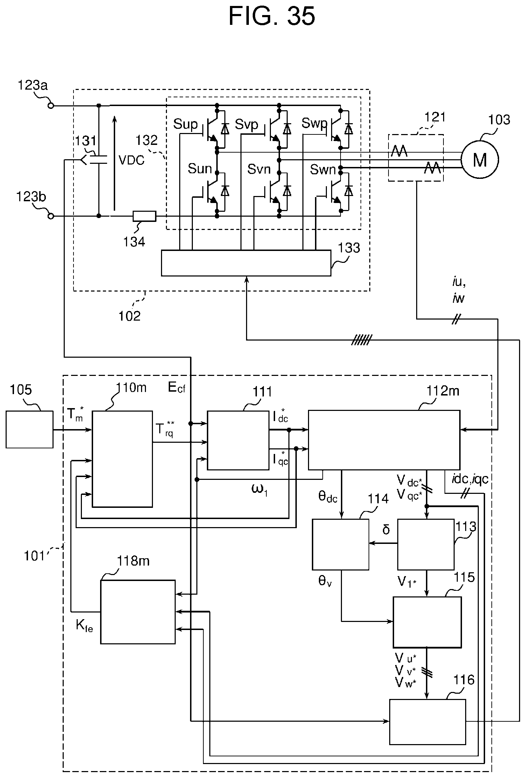

Fig. 35 is a block diagram for showing a configuration example of a drive system for a permanent-magnet synchronous machine of the seventh embodiment. Only different parts will be described in comparison with the first embodiment shown in Fig. 1.

In Fig. 35, the driving device for the permanent-magnet synchronous machine of the seventh embodiment can be realized by using a torque correction unit 110m instead of the torque correction unit 110 of the first embodiment in Fig. 1 and a vector control unit 112m instead of the vector control unit 112 and by adding a magnet magnetic flux coefficient calculation unit 118m.

The vector control unit 112m calculates and outputs the voltage command values Vdc* and Vqc* on the dc-qc-axes on the basis of the three-phase AC currents iu and iw that are the AC current detection values of the permanent-magnet synchronous machine 103 and the current command values Idc* and Iqc* on the dc-qc-axes coordinate system output by the current command calculation unit 111. In addition, the drive frequency ω1 of the permanent-magnet synchronous machine 103 and the control position θdc of the magnetic pole to be estimated are calculated and output on the basis of the voltage command values Vdc* and Vqc* and the detection values of the three-phase AC currents iu and iw. Further, the current detection values Idc and Iqc on the dc-qc-axes coordinate system are calculated and output on the basis of the detection values of the three-phase AC currents iu and iw and the estimated control position θdc.

The magnet magnetic flux coefficient calculation unit 118m computes and outputs a magnet magnetic flux coefficient Kfe of the permanent-magnet synchronous machine 103 on the basis of the drive frequency ω1 of the permanent-magnet synchronous machine 103 output from the vector control unit 112, the voltage command values Vdc* and Vqc* on the dc-qc-axes, and the current detection values Idc and Iqc on the dc-qc-axes coordinate system.

The torque correction unit 110m calculates and outputs the torque command correction value Trq** on the basis of the torque command Tm* output from the command generator 105, the current command values Idc* and Iqc* on the dc-qc-axes coordinate system output from the current command calculation unit 111, and the magnet magnetic flux coefficient Kfe output from the magnet magnetic flux coefficient calculation unit 118m.

Hereinafter, the magnet magnetic flux coefficient calculation unit 118m and the torque correction unit 110m that are characteristic parts of the seventh embodiment will be described in detail.

The magnet magnetic flux coefficient calculation unit 118m computes and outputs the magnet magnetic flux coefficient Kfe of the permanent-magnet synchronous machine 103 on the basis of the drive frequency ω1 of the permanent-magnet synchronous machine 103 output from the vector control unit 112, the voltage command values Vdc* and Vqc* on the dc-qc-axes, and the current detection values Idc and Iqc on the dc-qc-axes coordinate system. The magnet magnetic flux coefficient Kfe is calculated by, for example, the following Equation (16) on the basis of the voltage equation of the permanent-magnet synchronous machine expressed in the dq coordinate system.

[Equation 16]

$$K_{fe} = \frac{V_q^* - \omega_1 L_d i_{dc} - R_1 i_{qc}}{\omega_1} \quad \cdot \cdot \cdot \quad (1\,6)$$

In Equation (16), the polynomial of the numerator on the right side computes an induced voltage (speed electromotive voltage) generated in accordance with the rotational speed of the permanent-magnet synchronous machine 103. Thus, the magnet magnetic flux coefficient Kfe may be used as a value associated with the magnet magnetic flux of the permanent-magnet synchronous machine 103 on the basis of a value obtained by detecting or estimating the induced voltage of the permanent-magnet synchronous machine 103.

It should be noted that the d-axis inductance of the permanent-magnet synchronous machine is Ld and the winding resistance is R1 in Equation (16). In addition, instead of the current detection values Idc and Iqc on the dc-qc-axes coordinate system, the current command values Idc* and Iqc* on the dc-qc-axes coordinate system output from the current command calculation unit 111 may be used.

Here, the d-axis inductance Ld of the permanent-magnet synchronous machine has current dependency, and the winding resistance R1 has temperature dependency. Therefore, there is a risk that an error occurs in the calculation result of the magnet magnetic flux coefficient Kfe due to these motor constant errors. Accordingly, in order to ignore the influence of the motor constant errors of the permanent-magnet synchronous machine, the magnet magnetic flux coefficient Kfe is calculated on the basis of the voltage command value Vqc* on the dc-qc-axes in a state where the current is controlled to 0 by vector control and the drive frequency ω1, so that means that is not affected by the motor constant errors can be used. Alternatively, a magnetic flux sensor, a voltage sensor, or the like may be used to calculate and use a magnet magnetic flux coefficient equivalent from the detected values thereof and the drive frequency ω1.

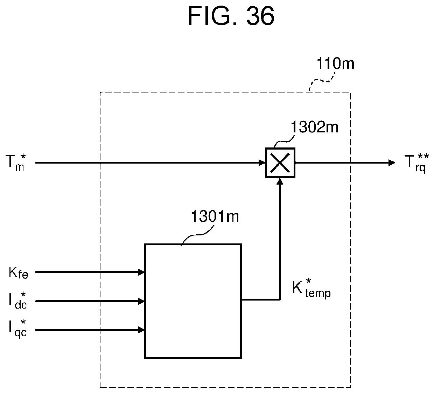

Fig. 36 is a block diagram for showing a configuration example of the torque correction unit 110m of the seventh embodiment. As shown in Fig. 36, the torque correction unit 110m includes a torque correction coefficient calculation unit 1301m and a multiplier 1302m. The torque correction unit 110m outputs a calculation result obtained by multiplying the torque command Tm* by the torque correction coefficient Ktemp* output from the torque correction coefficient calculation unit 1301m as the torque command correction value Trq**.

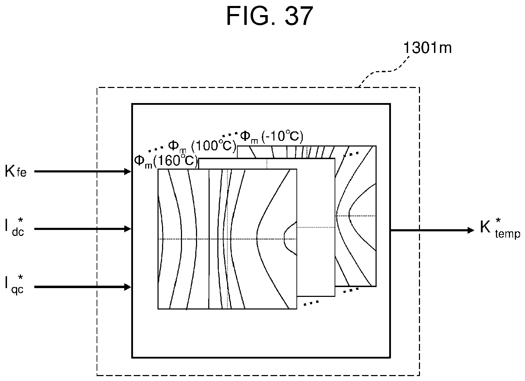

Fig. 37 is a block diagram for showing a configuration example of the torque correction coefficient calculation unit 1301m of the seventh embodiment. As shown in Fig. 37, the torque correction coefficient calculation unit 1301m calculates and outputs the torque correction coefficient Ktemp* on the basis of the magnet magnetic flux coefficient Kfe output from the magnet magnetic flux coefficient calculation unit 118m and the d-axis current command value Idc* and the q-axis current command value Iqc* output from the current command calculation unit 111. It should be noted that in the calculation of the torque correction coefficient Ktemp*, for example, a reference table in which the magnet magnetic flux coefficient Kfe, the d-axis current command value Idc, and the q-axis current command value Iqc* are as input may be used. In addition, the reference table of the torque correction coefficient Ktemp* may be obtained and used from, for example, a test or analysis in advance.

In the seventh embodiment, for example, in the case where the d- and q-axes current command values computed using the reference magnet magnetic flux coefficient KfeO based on the magnet magnetic flux Φm0 of the permanent-magnet synchronous machine 103 when the magnet temperature condition is the reference temperature Tmag0 are set in the reference tables of the d-axis current command calculation unit 202 and the q-axis current command calculation unit 203 of the current command calculation unit 111, the torque correction coefficient Ktemp* of the torque correction unit 110m can be compensated for the output torque fluctuation due to a change in the magnet temperature of the permanent-magnet synchronous machine 103 or a change in the magnet magnetic flux caused by the influence of demagnetization if the ratio of the output torque in accordance with a change in the magnet magnetic flux coefficient Kfe is provided as a reference table by using, as a reference, the output torque at the reference magnet magnetic flux coefficient KfeO same as the computation condition of the d-axis current command calculation unit 202 and the q-axis current command calculation unit 203 of the current command calculation unit 111.

In addition, the seventh embodiment can also be realized by using a torque correction coefficient calculation unit 1301n instead of the torque correction coefficient calculation unit 1301m.

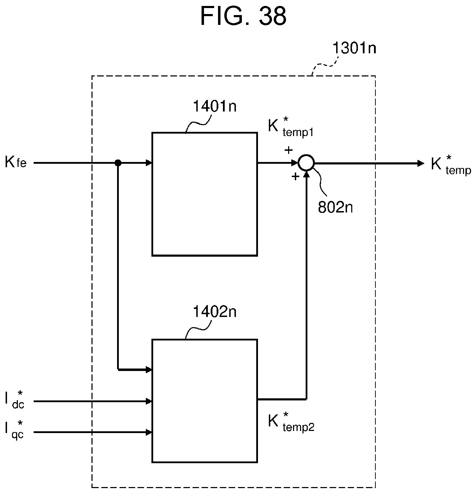

Fig. 38 is a block diagram for showing a configuration example of the torque correction coefficient calculation unit 1301n as a modified example of the seventh embodiment. The torque correction coefficient calculation unit 1301n does not use a three-dimensional reference table when computing the torque correction coefficient Ktemp* in accordance with the magnet magnetic flux coefficient, the d-axis current command, and the q-axis current command.

The torque correction coefficient calculation unit 1301n includes a magnet magnetic flux dependent torque correction coefficient calculation unit 1401n, a reluctance torque ratio correction coefficient calculation unit 1402n, and an adder 802n, and outputs a value obtained by adding the torque correction coefficient Ktemp1* output from the magnet magnetic flux dependent torque correction coefficient calculation unit 1401n and the torque correction coefficient Ktemp2* output from the reluctance torque ratio correction coefficient calculation unit 1402n as the torque correction coefficient Ktemp*.

The torque correction coefficient calculation unit 1301n is different from the torque correction coefficient calculation unit 301b of the first embodiment only in that the magnet magnetic flux coefficient Kfe is used instead of the magnet temperature Tmag, and the torque correction coefficient Ktemp1* and the torque correction coefficient Ktemp2* may be calculated on the basis of the magnet magnetic flux coefficient Kfe.

For example, since the magnet temperature Tmag of the permanent-magnet synchronous machine and the magnet magnetic flux coefficient Kfe have a proportional relationship, the torque correction coefficient calculation unit 301b can be easily replaced by the torque correction coefficient calculation unit 1301n if the magnet magnetic flux coefficient in accordance with a change in the magnet temperature Tmag is computed by using, as a reference, the reference magnet magnetic flux coefficient KfeO same as the computation condition of the d-axis current command calculation unit 202 and the q-axis current command calculation unit 203 of the current command calculation unit 111.

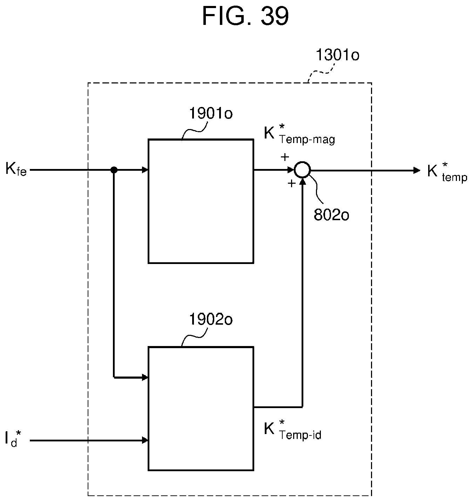

In addition, the seventh embodiment can also be realized by using a torque correction coefficient calculation unit 1301o instead of the torque correction coefficient calculation unit 1301m. Fig. 39 is a block diagram for showing a configuration example of the torque correction coefficient calculation unit 1301o as a modified example of the seventh embodiment. The torque correction coefficient calculation unit 1301o does not use a three-dimensional reference table in the computation of the torque correction coefficient Ktemp*.

The torque correction coefficient calculation unit 1301o computes the torque correction coefficient Ktemp* on the basis of the magnet magnetic flux coefficient Kfe output from the magnet magnetic flux coefficient calculation unit 118m and the d-axis current command value Idc* output from the current command calculation unit 111, so that the torque command correction value Trq** for a change in the magnet magnetic flux can be calculated without using a multidimensional table. As a result, it is possible to realize the drive device for the permanent-magnet synchronous machine that is less in the calculation load of the control device and can save memory capacity.

The torque correction coefficient calculation unit 1301o includes a magnet magnetic flux compensation coefficient calculation unit 1901o, a d-axis current characteristic compensation coefficient calculation unit 1902o, and an adder 802o, and outputs a value obtained by adding the torque correction coefficient Ktemp-mag* output from the magnet magnetic flux compensation coefficient calculation unit 1901o and the torque correction coefficient Ktemp-id* output from the d-axis current characteristic compensation coefficient calculation unit 1902o as the torque correction coefficient Ktemp*.

The magnet magnetic flux compensation coefficient calculation unit 1901o computes a coefficient corresponding to the amount of change in the output torque with respect to a change in the magnet temperature and a change in the magnet magnetic flux due to demagnetization by using, as a reference, the reference magnet magnetic flux coefficient KfeO that is the computation condition of the d-axis current command calculation unit 202 and the q-axis current command calculation unit 203 of the current command calculation unit 111 on the basis of the magnet magnetic flux coefficient Kfe, and outputs the same as the torque correction coefficient Ktemp-mag*.

On the basis of the d-axis current command value Idc* and the magnet magnetic flux coefficient Kfe, the d-axis current characteristic compensation coefficient calculation unit 1902o computes a coefficient corresponding to the amount of change in the ratio of magnet torque to reluctance at arbitrary current operating points of Idc* and Iqc* with respect to the change in the magnet temperature and the change in the magnet magnetic flux due to demagnetization by using the reference magnet magnetic flux coefficient KfeO as a reference, and outputs the same as the torque correction coefficient Ktemp-id*.

The torque correction coefficient calculation unit 1301o is different from the torque correction coefficient calculation unit 301g of the fifth embodiment only in that the magnet magnetic flux coefficient Kfe is used instead of the magnet temperature Tmag, and may be configured to calculate the torque correction coefficient Ktemp-mag* and the torque correction coefficient Ktemp-id* on the basis of the magnet magnetic flux coefficient Kfe.

It should be noted that although the seventh embodiment has been described above by using the magnet magnetic flux coefficient Kfe, the seventh embodiment can also be realized by using the detection value or the estimation value of the magnet magnetic flux $\Phi m$ of the permanent-magnet synchronous machine 103 as the input variable of the torque command correction or the reference of the current command reference table. That is, the value that can be used for the input variable of the torque command correction or the reference of the current command reference table may be any value as long as it can be associated with the magnet magnetic flux of the permanent-magnet synchronous machine 103.

Therefore, in the seventh embodiment, by correcting the torque command value on the basis of the magnet magnetic flux of the permanent-magnet synchronous machine and the current command value, the compensation calculation for the output torque fluctuation with respect to the change in the magnet temperature and the change in the magnet magnetic flux due to demagnetization can be realized, and it is possible to realize the high accuracy of the torque control at the time of fluctuation of the magnet temperature including the demagnetization of the permanent-magnet synchronous machine in the drive device for the permanent-magnet synchronous machine.

The seventh embodiment has been described above. Although the seventh embodiment has been described by mainly using the first embodiment as the basic configuration for the purpose of description, the second to sixth embodiments can be similarly applied as the basic configurations.

[Eighth Embodiment]

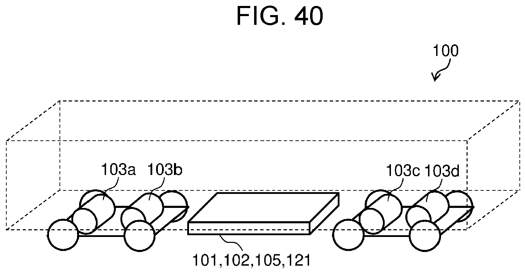

Next, an eighth embodiment of the present invention will be described. Fig. 40 is a diagram for showing an outline configuration of a part of a railway vehicle in which the drive system for the permanent-magnet synchronous machine according to any one of the first to seventh embodiments is mounted. By applying the drive system for the permanent-magnet synchronous machine according to any one of the first to seventh embodiments to a railway vehicle 100, it is possible to realize a railway vehicle capable of improving torque accuracy, operation efficiency, and torque control response when the magnet temperature fluctuates.

For example, the railway vehicle 100 has a wagon on which permanent-magnet synchronous machines 103a and 103b are mounted and a wagon on which permanent-magnet synchronous machine 103c and 103d are mounted. In addition, the railway vehicle is also equipped with the drive system (drive device) for the permanent-magnet synchronous machine including the controller 101, the power converter 102, the command generator 105, and the phase current detection unit 121.

In accordance with the torque command Tm* generated by the command generator 105 on the basis of an operation command input by a driver through a master controller, the railway vehicle 100 converts electric power supplied from an overhead contact line through a power collector into AC electric power by the power converter 102, and supplies the same to the permanent-magnet synchronous machine 103 to drive the permanent-magnet synchronous machine 103.

The permanent-magnet synchronous machine 103 is coupled to an axle of the railway vehicle 100, and the travel of the railway vehicle 100 is controlled by the permanent-magnet synchronous machine 103. In the eighth embodiment, by applying the first to seventh embodiments to the railway vehicle 100, it is possible to realize a railway vehicle capable of achieving the high response and high accuracy of the torque control and high-efficiency operation.

The present invention relates to a drive device for a permanent-magnet synchronous machine and a torque compensation method for a permanent-magnet synchronous machine, and is suitable for application to, for example, an electric vehicle such as an electric railway vehicle or an electric automobile, an inverter system for an industrial machine or the like, a wind power generation system, a diesel generator system, and the like. In addition, the present invention can be applied to not only a permanent-magnet synchronous motor but also a permanent-magnet synchronous generator.

It should be noted that the present invention is not limited to the above-described embodiments, but includes various modified examples. For example, the embodiments have been described to easily understand the present invention, and the present invention is not necessarily limited to those including all the configurations described above. Further, some configurations of an embodiment can be replaced by a configuration of another embodiment, and a configuration of an embodiment can be added to a configuration of another embodiment. In addition, some configurations of each embodiment can be added to, deleted from, and replaced by other configurations. In addition, each of the configurations and processes exemplified in the above-described embodiments and modified examples may be appropriately integrated or separated in accordance with the implementation configuration and processing efficiency, or the processing order may be replaced. In addition, for example, some or all of the above-described embodiments and modified examples may be combined without contradiction.

List of Reference Signs

100: railway vehicle
101: controller
102: power converter
103: permanent-magnet synchronous machine
103a, 103c: permanent-magnet synchronous machine
105: command generator
110, 110c, 110g, 110m: torque correction unit
111, 111d, 111e, 111f: current command calculation unit
112, 112e, 112m: vector control unit
113: polar coordinate conversion unit
114: phase calculation unit
115: three-phase coordinate conversion unit
116: PWM signal controller
117h, 117i, 117k: torque command loss compensation unit

118m: magnet magnetic flux coefficient calculation unit

121: phase current detection unit

123a, 123b: input terminal

124: rotational position detection unit

125: temperature detection unit

131: smoothing capacitor

132: main circuit unit

133: gate driver

134: DC resistor

201: magnetic flux amount limit value calculation unit

202: d-axis current command calculation unit

203: q-axis current command calculation unit

301, 301b, 301g, 302c: torque correction coefficient calculation unit

401b: magnet temperature dependent torque correction coefficient calculation unit

402b: reluctance torque ratio correction coefficient calculation unit

501b: reluctance torque ratio magnet temperature correction unit

502b: reluctance torque estimation calculation unit

601d: magnetic flux amount limit value calculation unit

601e: magnetic flux amount limit value calculation unit

701f: d-axis current command three-dimensional table reference unit

702f: q-axis current command three-dimensional table reference unit

901g: magnet temperature compensation coefficient calculation unit

902g: d-axis current characteristic compensation coefficient calculation unit

1001g: d-axis current characteristic magnet temperature correction coefficient calculation unit

1002g: d-axis current characteristic coefficient calculation unit

1201h, 1201i, 1201j, 1201k: iron loss calculation unit

1202h: mechanical loss calculation unit

1203h: load loss calculation unit

1204h: loss torque conversion unit

1205h: output adjustment unit

1211h, 1211i: hysteresis loss calculation unit

1211j: hysteresis loss frequency normalization value calculation unit

1211k: hysteresis loss frequency normalization value calculation unit

1212h, 1212i: eddy current loss calculation unit

1212j, 1212k: eddy current loss frequency normalization value calculation unit

1221h: bearing loss calculation unit

1222h: wind loss calculation unit

1231h: stray load loss calculation unit

1232h: external load loss calculation unit

1252h: gear efficiency calculation unit

1301m, 1301n, 1301o: torque correction coefficient calculation unit

1401n: magnet magnetic flux dependent torque correction coefficient calculation unit

1402n: reluctance torque ratio correction coefficient calculation unit

1901o: magnet magnetic flux compensation coefficient calculation unit

1902o: d-axis current characteristic compensation coefficient calculation unit

**Claims**

1. A drive device for a permanent-magnet synchronous machine comprising a power converter for driving the permanent-magnet synchronous machine and a controller for controlling the power converter,
   wherein the controller includes:

   a torque correction unit for correcting an input torque command value; and
   a current command calculation unit for generating a current command value for driving and controlling the permanent-magnet synchronous machine from the torque command value corrected by the torque correction unit, and
   wherein the torque correction unit corrects the torque command value on the basis of a value associated with the magnet magnetic flux of the permanent-magnet synchronous machine and the current command value generated by the current command calculation unit.

2. The drive device for the permanent-magnet synchronous machine according to claim 1,
   wherein the value associated with the magnet magnetic flux is the magnet temperature of the permanent-magnet synchronous machine.

3. The drive device for the permanent-magnet synchronous machine according to claim 1,
   wherein the value associated with the magnet magnetic flux is the induced voltage of the permanent-magnet synchronous machine.

4. The drive device for the permanent-magnet synchronous machine according to any one of claims 1 to 3,
   whereon the current command calculation unit includes:

   a magnetic flux amount limit value calculation unit for calculating a magnetic flux amount limit value from a DC voltage detection value of the power converter and the rotational speed of the permanent-magnet synchronous machine; and
   a d-q-axes current command calculation unit for generating a d-axis current command value and a q-axis current command value as the current command values from the magnetic flux amount limit value calculated by the magnetic flux amount limit value calculation unit and the torque command value corrected by the torque correction unit.

5. The drive device for the permanent-magnet synchronous machine according to claim 4,
   wherein the current command calculation unit generates the d-axis current command value and the q-axis current command value corresponding to the magnetic flux amount limit value calculated by the magnetic flux amount limit value calculation unit and the torque command value corrected by the torque correction unit by referring to a table in which the magnetic flux amount limit value, the torque command value, the d-axis current command value, and the q-axis current command value are associated with each other.

6. The drive device for the permanent-magnet synchronous machine according to claim 4 or 5,
   wherein the magnetic flux amount limit value calculation unit corrects the magnetic flux amount limit value on the basis of the magnet temperature of the permanent-magnet synchronous machine.

7. The drive device for the permanent-magnet synchronous machine according to claim 4 or 5,
   wherein the magnetic flux amount limit value calculation unit corrects the magnetic flux amount limit value on the basis of an output voltage limit value of the power converter or a target voltage value of field-weakening control of the controller.

8. The drive device for the permanent-magnet synchronous machine according to any one of claims 4 to 7,
   wherein the d-q-axes current command calculation unit generates the d-axis current command value and the q-axis current command value from the DC voltage detection value of the power converter, the rotational speed of the permanent-magnet synchronous machine, and the torque command value.

9. The drive device for the permanent-magnet synchronous machine according to any one of claims 4 to 8,
   wherein the torque correction unit corrects the torque command value on the basis of a value associated with the magnet magnetic flux and the d-axis current command value generated by the d-q-axes current command calculation unit.

10. The drive device for the permanent-magnet synchronous machine according to claim 1,
    wherein the controller includes a torque command loss compensation unit for calculating a loss torque value by using at least any one of the torque command value, the current command value, a current detection value of the permanent-magnet synchronous machine, a voltage command value for driving the permanent-magnet synchronous machine generated on the basis of the current command value, the rotational speed of the permanent-magnet synchronous machine, the DC voltage detection value of the power converter, and a mechanical parameter of the permanent-magnet synchronous machine, and compensating the torque command value on the basis of the calculated loss torque value.

11. A torque compensation method for a permanent-magnet synchronous machine comprising a power converter for driving the permanent-magnet synchronous machine and a controller for controlling the power converter, wherein the controller includes:

a torque correction unit for correcting an input torque command value; and
a current command calculation unit for generating a current command value for driving and controlling the permanent-magnet synchronous machine from the torque command value corrected by the torque correction unit, and
wherein the torque correction unit corrects the torque command value on the basis of a value associated with the magnet magnetic flux of the permanent-magnet synchronous machine and the current command value generated by the current command calculation unit.

12. The torque compensation method for the permanent-magnet synchronous machine according to claim 11, wherein the value associated with the magnet magnetic flux is the magnet temperature of the permanent-magnet synchronous machine.

13. The torque compensation method for the permanent-magnet synchronous machine according to claim 11, wherein the value associated with the magnet magnetic flux is the induced voltage of the permanent-magnet synchronous machine.

14. The torque compensation method for the permanent-magnet synchronous machine according to any one of claims 11 to 13,
wherein the current command calculation unit calculates a magnetic flux amount limit value from a DC voltage detection value of the power converter and the rotational speed of the permanent-magnet synchronous machine, and generates a d-axis current command value and a q-axis current command value as the current command values from the calculated magnetic flux amount limit value and the torque command value corrected by the torque correction unit.

15. An electric vehicle comprising the drive device for the permanent-magnet synchronous machine according to any one of claims 1 to 10.

# FIG. 1

FIG. 2

# FIG. 3

# FIG. 4

# FIG. 5

# FIG. 6

# FIG. 7

# FIG. 8

FIG. 9

# FIG. 10

# FIG. 11

# FIG. 12

# FIG. 13

## FIG. 14

# FIG. 15

FIG. 16

# FIG. 17

EP 3 950 403 A1

FIG. 18

# FIG. 19

# FIG. 20

# FIG. 21

EP 3 950 403 A1

# FIG. 22

# FIG. 23

# FIG. 24

# FIG. 25

# FIG. 26

# FIG. 27

1205h

$T_{out}$

852h

$\div$

$T_m^{**}$

1252h

$h_g$

$\omega_1$

# FIG. 28

# FIG. 29

# FIG. 30

FIG. 31

# FIG. 32

FIG. 33

# FIG. 34

# FIG. 35

# FIG. 36

## FIG. 37

# FIG. 38

# FIG. 39

1301o

1901o

$K^{*}_{Temp\text{-}mag}$

$K_{fe}$

$K^{*}_{temp}$

802o

1902o

$K^{*}_{Temp\text{-}id}$

$I^{*}_{d}$

FIG. 40

100

103a 103b    103c 103d

101,102,105,121

**EP 3 950 403 A1**

## INTERNATIONAL SEARCH REPORT

| | International application No. |
|---|---|
| | PCT/JP2019/049067 |

### A. CLASSIFICATION OF SUBJECT MATTER
Int.Cl. B60L15/20(2006.01)i, H02M7/48(2007.01)i, H02P6/08(2016.01)i, H02P21/06(2016.01)i, H02P27/06(2006.01)i, H02P29/66(2016.01)i, B60L9/18(2006.01)i
FI: H02P6/08, B60L9/18J, B60L15/20J, H02M7/48E, H02P21/06, H02P27/06, H02P29/66
According to International Patent Classification (IPC) or to both national classification and IPC

### B. FIELDS SEARCHED
Minimum documentation searched (classification system followed by classification symbols)
Int.Cl. B60L15/20, H02M7/48, H02P6/08, H02P21/06, H02P27/06, H02P29/66, B60L9/18

Documentation searched other than minimum documentation to the extent that such documents are included in the fields searched
Published examined utility model applications of Japan       1922–1996
Published unexamined utility model applications of Japan     1971–2020
Registered utility model specifications of Japan             1996–2020
Published registered utility model applications of Japan     1994–2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 8-331900 A (MEIDENSHA CORPORATION) 13.12.1996 (1996-12-13), paragraphs [0065]-[0074], [0080]-[0088], fig. 1, 4, 14 | 1-3, 11-13<br>4-8, 10, 14-15<br>9 |
| X<br>Y | JP 2016-86634 A (HYUNDAI MOTOR CO., LTD.) 19.05.2016 (2016-05-19), paragraphs [0002]-[0004], [0022]-[0045], fig. 1-4 | 1-2, 11-12<br>4-8, 10, 14-15 |
| Y | US 2016/0056738 A1 (HYUNDAI MOTOR COMPANY) 25.02.2016 (2016-02-25), paragraphs [0030]-[0046], fig. 1 | 4-8, 10, 14-15 |
| Y | JP 4462207 B2 (AISIN AW CO., LTD.) 12.05.2010 (2010-05-12), paragraphs [0027], [0040]-[0069], fig. 1 | 7-8, 15 |
| A | JP 2009-261182 A (TOYOTA MOTOR CORPORATION) 05.11.2009 (2009-11-05), paragraphs [0032]-[0060], fig. 2-4 | 1-15 |

☐ Further documents are listed in the continuation of Box C.          ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 04.02.2020 | 18.02.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT
Information on patent family members

International application No.

PCT/JP2019/049067

| | | |
|---|---|---|
| JP 8-331900 A | 13.12.1996 | (Family: none) |
| JP 2016-86634 A | 19.05.2016 | US 2016/0114801 A1<br>paragraphs [0003], [0004],<br>[0030]-[0058], fig. 1-4<br>DE 102015219717 A1<br>KR 10-2016-0049898 A<br>CN 105577061 A |
| US 2016/0056738 A1 | 25.02.2016 | EP 2990254 A1<br>paragraphs [0025]-[0041], fig. 1<br>KR 10-1535036 B1<br>CN 105790663 A |
| JP 4462207 B2 | 12.05.2010 | (Family: none) |
| JP 2009-261182 A | 05.11.2009 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000184766 A

- JP 2006304441 A